# EUROPEAN PATENT APPLICATION

(11) **EP 4 797 738 A1**
(43) Date of publication of application: **26.08.2026**
(21) Application number: 24884576.0
(22) Date of filing: 24.10.2024
(51) Int. Cl.: H04W 4/20, H04W 76/11, H04W 4/08

(54) **COMMUNICATION METHOD AND APPARATUS**

(30) Priority: 03.11.2023 CN 202311466812
(71) Applicant: HUAWEI TECHNOLOGIES CO., LTD., Shenzhen 518129 (CN)
(72) Inventor: HAN, Zhilin, Shenzhen, Guangdong 518129 (CN); XU, Yishan, Shenzhen, Guangdong 518129 (CN); ZHOU, Runze, Shenzhen, Guangdong 518129 (CN); WENHAM, Steven James, Shenzhen, Guangdong 518129 (CN)
(74) Representative: Isarpatent
(86) International application number: PCT/CN2024/127159
(87) International publication number: WO 2025/092572

(57) **Abstract**

This application provides a communication method and apparatus, and relates to the field of communication technologies. An access network device receives at least two pieces of first information, where each piece of first information includes an operation identifier, and the operation identifier indicates information about a corresponding service operation. If operation identifiers in the at least two pieces of first information are the same, in this application, the operation identifier indicates the information about the corresponding service operation. If the access network device receives at least two same operation identifiers, it is considered that a plurality of same operation instructions are received, and the access network device executes only once the service operation corresponding to the operation identifier. In this way, executing the same operation instruction a plurality of times and consequently reporting a plurality of same operation results can be avoided, and information redundancy can be avoided. In addition, signaling exchanged between access network devices can be reduced, thereby further saving signaling resources and improving data processing efficiency.

## Description

### CROSS-REFERENCE TO RELATED APPLICATIONS

This application claims priority to Chinese Patent Application No. 202311466812.0, filed with the China National Intellectual Property Administration on November 3, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In passive internet of things (passive IoT, P-IoT; or referred to as ambient IoT, A-IoT) services, a server may send operation instructions to a passive internet of things device via a core network. The operation instructions may include but are not limited to: information about the passive internet of things device obtaining, operation types (inventory, read, write, and the like), and the like. A radio access network (radio access network, RAN) device sends access instructions to the passive internet of things devices. After the passive internet of things device successfully performs random access, the RAN device sends instructions (including operation instructions forwarded by a base station) to the passive internet of things device. The passive internet of things device obtains or sends corresponding operation information according to the instructions, and uploads the operation information to the core network.

However, a plurality of core network devices configured to manage a plurality of areas may select a same RAN device. As a result, the same RAN device receives same operation instructions that are sent by the plurality of core network devices and that are for a terminal within coverage of the RAN device. Because in the P-IoT service, the RAN device cannot perceive that a plurality of same operation instructions are received, the RAN device executes the same operation instruction a plurality of times and obtains same operation results. Reporting the plurality of same operation results by the RAN device leads to information redundancy.

### SUMMARY

This application provides a communication method and apparatus, to avoid information redundancy caused by execution of a same operation instruction a plurality of times when a RAN device receives a plurality of the same operation instructions.

According to a first aspect, this application provides a communication method, applied to an access network device. The access network device may be a radio access network device, a transmission reception point (transmission reception point, TRP), a 5th generation (5th generation, 5G) base station (gNodeB, gNB), a pole site, a micro base station, an indoor pole site, an integrated access and backhaul (integrated access and backhaul, IAB) node, or the like, or may be a chip configured to implement a function of the access network device. This is not specifically limited herein in this application. The method is performed as follows.

The access network device receives at least two pieces of first information, where each piece of first information includes an operation identifier, and the operation identifier indicates information about a corresponding service operation; and executes once, if operation identifiers in the at least two pieces of first information are the same, the service operation corresponding to the operation identifier.

There is usually a correspondence between the operation identifier and the information about the service operation. The information about the service operation usually includes a service operation requested by a service requester to be executed for an area (where operation types of the service operation include inventory operation, read operation, write operation, interaction operation, disable operation, positioning operation, and the like). For example, information 1 about a service operation is an inventory operation of a service requester 1 for an area 1, and a service operation identifier determined based on the information about the service operation is an operation identifier 1. In this case, the operation identifier 1 indicates the information 1 about the service operation. If simultaneously receiving two operation identifiers 1, the access network device executes only once the service operation corresponding to the operation identifier 1, to be specific, performs inventory on a corresponding terminal that is of the service requester 1 and that is in the area 1.

In this application, the operation identifier indicates the information about the corresponding service operation. If the access network device receives at least two same operation identifiers, it is considered that a plurality of same operation instructions are received, and the access network device executes only once the service operation corresponding to the operation identifier. In this way, executing the same operation instruction a plurality of times and consequently reporting a plurality of same operation results can be avoided, and information redundancy can be avoided. In addition, signaling exchanged between access network devices can be reduced, thereby further saving signaling resources and improving data processing efficiency.

In an optional manner, that the access network device receives the at least two pieces of first information includes: receiving the first information from at least two core network devices.

The core network device may be a 5G core network device like an AMF, a TMF, or an NEF, or may be a device in 3G, 4G, 6G, or even a future core network. This is not specifically limited herein.

In an optional manner, that the access network device executes once, if the operation identifiers in the at least two pieces of first information are the same, the service operation corresponding to the operation identifier includes:
if the operation identifiers in the at least two pieces of first information are the same, broadcasting random access information once; obtaining information about a terminal that performs random access, where the information about the terminal includes an identifier of the terminal; determining, based on the identifier of the terminal, a first target core network device associated with the terminal, where the first target core network device is one of the at least two core network devices; and sending the information about the terminal to the first target core network device. Subsequently, a first target network device may execute a service operation, for example, a read operation or a write operation, on the terminal based on information about the service operation.

In an optional manner, that the access network device executes once, if the operation identifiers in the at least two pieces of first information are the same, the service operation corresponding to the operation identifier includes:
if the operation identifiers in the at least two pieces of first information are the same, broadcasting random access information once; obtaining information about a terminal that performs random access, where the information about the terminal includes an identifier of the terminal and operation information obtained by the terminal by executing a service operation; determining, based on the identifier of the terminal, a first target core network device associated with the terminal, where the first target core network device is one of the at least two core network devices; and sending the information about the terminal to the first target core network device.

The random access information includes: indicating a passive internet of things device within coverage of the access network device to perform random access to the access network device. Optionally, indicating the passive internet of things device within the coverage to perform random access further includes: indicating, to perform random access to the access network device, an internet of things device that meets a mask range and that is within the coverage.

Optionally, after sending the information about the terminal to the first target core network device, the access network device may further reject another core network device among the at least two core network devices. A possible form is sending a rejection message to the another core network device among the at least two core network devices.

In this application, when determining that operation identifiers from a plurality of core network devices are the same, the access network device broadcasts the random access information only once. In this manner, avoid executing a same operation instruction a plurality of times can be avoided. In addition, the access network device selects, based on information about a terminal that performs random access, a core network device for uplink transmission, thereby avoiding exchanging context information of the terminal between the plurality of core network devices, and avoiding performing security authentication, based on the obtained context information of the terminal, on the terminal that performs random access. Once obtaining the information about the terminal that performs random access, the access network device may select, based on the information about the terminal, a core network device associated with the terminal, and sends, to the selected core network device, the information obtained by executing the service operation on the terminal. In this manner, signaling exchange between the plurality of core network devices are reduced, and signaling resources can be saved.

In an optional manner, that the access network device executes once, if the operation identifiers in the at least two pieces of first information are the same, the service operation corresponding to the operation identifier includes:
if the operation identifiers in the at least two pieces of first information are the same, executing a service operation corresponding to an operation identifier from a second target core network device among the at least two core network devices, and rejecting to execute a service operation corresponding to an operation identifier from another core network device among the at least two core network devices other than the second target core network device, where the second target core network device is one of the at least two core network devices.

If determining that the operation identifiers in the at least two pieces of first information are the same, the access network device randomly selects an operation instruction from a core network device for execution (when sending an operation identifier to the access network device, the core network device usually also includes an operation instruction, where the operation instruction may include an area for which the service requester requests an operation, a service type of the requested service operation, and the like, and details are not described for description herein), and then may broadcast the random access information once; obtains the information about the terminal that performs random access, where the information about the terminal includes the identifier of the terminal; and determines, based on the identifier of the terminal, the core network device associated with the terminal (to be specific, a core network device that stores the context information of the terminal), where the core network device associated with the terminal is one of the at least two core network devices. If the core network device associated with the terminal is the foregoing randomly selected core network device, the access network device sends the information about the terminal to the core network device associated with the terminal. If the core network device associated with the terminal is not the foregoing randomly selected core network device, the randomly selected core network device needs to request the context information of the terminal from the core network device associated with the terminal, and perform identity authentication on the terminal based on the context information of the terminal. After the authentication succeeds, the access network device sends the information about the terminal to the randomly selected core network device. Subsequently, the core network device executes the service operation, for example, a read operation or a write operation, on the terminal based on information about the service operation.

The random access information includes: indicating a passive internet of things device within coverage of the access network device to perform random access to the access network device. Optionally, indicating the passive internet of things device within the coverage to perform random access further includes: indicating, to perform random access to the access network device, an internet of things device that meets a mask range and that is within the coverage.

In this application, when determining that operation identifiers from a plurality of core network devices are the same, the access network device executes only a service operation corresponding to an operation identifier from one of the at least two core network devices, and rejects a service operation corresponding to an operation identifier of another core network device among the at least two core network devices. In this manner, executing a same operation instruction a plurality of times can be avoided.

In an optional manner, after the service operation corresponding to the operation identifier from the another core network device among the at least two core network devices other than the second target core network device is rejected being executed, the method further includes:
sending indication information to the another core network device, where the indication information indicates that the service operation corresponding to the operation identifier from the another core network device is a repeated service operation.

In this application, the access network device can avoid, based on the information indicating the repeated service operation, repeatedly executing a random access instruction, thereby reducing redundancy of operations of the access network device.

According to a second aspect, this application provides a communication method, applied to a first core network device. The first core network device may be a network exposure function (network exposure function, NEF). This is not specifically limited herein in this application. The method is performed as follows:
determining an operation identifier, where the operation identifier indicates information about a corresponding service operation; and sending the operation identifier.

In an optional manner, that the first core network device sends the operation identifier includes: sending operation identifiers to at least two second core network devices (where the second core network device may be an AMF, a passive internet of things device management function (tag management function, TMF), or the like).

The at least two second core network devices may be core network devices that execute corresponding service operations and that are determined by the first core network device. The first core network device may determine the second core network device based on location information that is in first information and that is of a service requester, or may obtain information from another device, to determine information about at least two first core network devices. This is not specifically limited herein in this application.

In an optional manner, that the first core network device determines the operation identifier includes: receiving first information from a service requester, where the first information includes the operation identifier and the information about the service operation; and determining the operation identifier based on the first information.

Optionally, if the first core network device determines only one second core network device, the operation identifier does not need to be constructed (generated, determined, or obtained).

In an optional manner, that the first core network device determines the operation identifier includes: receiving second information from a service requester, where the second information includes the information about the service operation; and generating the operation identifier based on the information about the service operation.

In an optional manner, the information about the service operation indicates at least one type of the following information: service requester, operation type, to-be-operated range, and request time point of the service operation.

The service requester may perform indicating by using at least one type of the following information: identifier of the service requester, internet protocol (internet protocol, IP) address of the service requester, media access control address (media access control address, MAC address) of the service requester, and port number of the service requester. The to-be-operated range is a to-be-operated area of the service requester or an identifier of a to-be-operated group of the service requester. The to-be-operated area is indicated by at least one type of the following information: information about a cell that is covered by an access network device and that is of the to-be-operated area, information about a tracking area in which the to-be-operated area is located, and information about a geographical location of the to-be-operated area.

According to a third aspect, this application provides a communication method, applied to a first core network device. The first core network device may be an AMF, a TMF, or the like. This is not specifically limited herein in this application. The method is performed as follows:
obtaining information about a core network device group, where the core network device group includes the first core network device and at least one second core network device (which may be an AMF, a TMF, or the like, and the first core network device and the second core network device are devices of a same type, for example, both are AMFs); separately receiving an identifier that is of a second access network device and that is separately sent by the at least one second core network device, where one second access network device is a candidate device of one corresponding second core network device; and selecting a target access network device based on an identifier of a first access network device and identifiers of a plurality of second access network devices, where the target access network device is different from a target access network device separately selected by the at least one second core network device, and the first access network device is a candidate device of the first core network device.

In this application, the first core network device and the second core network device negotiate to select access network devices. This can avoid a case in which a same access network device receives operation instructions from different core network devices, thereby avoiding executing the same operation instruction a plurality of times.

In an optional manner, before the first core network device selects the target access network device based on the identifier of the first access network device and the identifiers of the plurality of second access network devices, the method further includes: sending the identifier of the first access network device to the at least one second core network device.

In an optional manner, that the first core network device obtains the information about the core network device group includes: receiving first information from a third core network device (where the third core network device may be an NEF or the like), where the first information includes the information about the core network device group; and obtaining the information about the core network device group based on the first information.

According to a fourth aspect, this application provides a communication method, applied to a third core network device. The third core network device may be an NEF or the like. This is not specifically limited herein in this application. The method is performed as follows:
determining information about a core network device group, where the core network device group includes a first core network device and at least one second core network device (where the first core network device and the second core network device may be AMFs, TMFs, or the like, where the first core network device and the second core network device are devices of a same type, for example, both are AMFs); and sending the information about the core network device group to the first core network device.

In an optional manner, that the third core network device determines the information about the core network device group includes: receiving request information from a service requester, where the request information includes information about a service operation, and the information about the service operation indicates information about a to-be-operated area of the service operation; and determining the information about the core network device group based on the information about the to-be-operated area. The third core network device sends the information about the core network device group to the first core network device includes: sending first information to the first core network device, where the first information includes the information about the core network device group.

In an optional manner, the first information further includes an operation identifier, and the operation identifier indicates the information about the corresponding service operation.

In an optional manner, the information about the service operation indicates at least one type of the following information: service requester, operation type, to-be-operated range, and request time point of the service operation.

According to a fifth aspect, this application provides a communication method, applied to a first core network device. The first core network device may be an NEF. This is not specifically limited herein in this application. The method is performed as follows:
obtaining at least one piece of location information and an identifier that is of an access network device and that corresponds to each piece of location information; selecting at least two second core network devices (where the second core network device may be an AMF, a TMF, or the like) based on target location information, where the at least two second core network devices are located in a location area corresponding to the target location information, and the target location information is one of the at least one piece of location information; and allocating different identifiers of access network devices to the at least two second core network devices based on an identifier that is of an access network device and that corresponds to the target location information, and sending the allocated identifiers of the access network devices respectively to the at least two second core network devices.

In this application, the first core network device obtains the at least one piece of location information and the identifier that is of the access network device and that corresponds to each piece of location information, and allocates different access network devices to different second core network devices based on this. This can avoid a case in which a same access network device receives operation instructions from different core network devices, thereby avoiding executing the same operation instruction a plurality of times.

In an optional manner, that the first core network device obtains the at least one piece of location information and the identifier that is of the access network device and that corresponds to each piece of location information includes: receiving first information from a data management network element, where the first information includes the at least one piece of location information and the identifier that is of the access network device and that corresponds to each piece of location information.

In an optional manner, the first core network device further receives request information from a service requester, where the request information includes information about a service operation, and the information about the service operation indicates information about a to-be-operated area of the service operation; and determines the target location information based on the information about the to-be-operated area.

According to a sixth aspect, this application provides a communication method, applied to a second core network device. The second core network device may be an AMF, a TMF, or the like. This is not specifically limited herein in this application. The method is performed as follows:
obtaining at least one piece of location information and an identifier that is of an access network device and that corresponds to each piece of location information; sending, to a data management network element, the at least one piece of location information and the identifier that is of the access network device and that corresponds to each piece of location information; and receiving an identifier of a first access network device and from a first core network device, where the identifier of the first access network device is an identifier that is of an access network device and that corresponds to target location information, the target location information is one of the at least one piece of location information, and the second core network device is located in a location area corresponding to the target location information.

According to a seventh aspect, an embodiment of this application provides a communication apparatus. The communication apparatus may be an access network device (for example, the access network device in the first aspect or a chip disposed inside the access network device), or may be a core network device or a chip disposed inside the core network device. The communication apparatus has a function of implementing any one of the first aspect to the sixth aspect. For example, the communication apparatus includes a corresponding module, unit, or means (means) for performing steps in any one of the first aspect to the sixth aspect. The function, unit, or means may be implemented by using software, implemented by using hardware, or implemented by hardware executing corresponding software.

In a possible design, the communication apparatus includes a processing unit and a transceiver unit. The transceiver unit may be configured to receive and send signals, to implement communication between the communication apparatus and another apparatus. For example, the transceiver unit is configured to receive request information from a service requester. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to receive and send signals, and the processor executes program instructions, to complete the method in any one of the possible designs or implementations of the first aspect to the sixth aspect. The communication apparatus may further include one or more memories. The memory is configured to be coupled to the processor, and the memory may store a necessary computer program or instructions for implementing the function in any one of the first aspect to the sixth aspect. The processor may execute the computer program or the instructions stored in the memory. When the computer program or the instructions are executed, the communication apparatus is caused to implement the method in any one of the possible designs or implementations of the first aspect to the sixth aspect.

In another possible design, the communication apparatus includes a processor. The processor may be configured to be coupled to a memory. The memory may store a necessary computer program or instructions for implementing the function in any one of the first aspect to the sixth aspect. The processor may execute the computer program or the instructions stored in the memory. When the computer program or the instructions are executed, the communication apparatus is caused to implement the method in any one of the possible designs or implementations of the first aspect to the sixth aspect.

In another possible design, the communication apparatus includes a processor and an interface circuit. The processor is configured to: communicate with another apparatus by using the interface circuit, and perform the method in any one of the possible designs or implementations of the first aspect to the sixth aspect.

It may be understood that, in the seventh aspect, the processor may be implemented by using hardware, or may be implemented by using software. When the processor is implemented by using the hardware, the processor may be a logic circuit, an integrated circuit, or the like; or when the processor is implemented by using the software, the processor may be a general-purpose processor, and be implemented by reading software code stored in a memory. In addition, there may be one or more processors, and there may be one or more memories. The memory and the processor may be integrated together, or the memory and the processor are disposed separately. During specific implementation, the memory and the processor may be integrated into one chip, or may be respectively disposed on different chips. A type of the memory and a manner in which the memory and the processor are disposed are not limited in embodiments of this application.

According to an eighth aspect, an embodiment of this application provides a communication system. The communication system includes the access network device and the core network device in the first aspect to the sixth aspect.

According to a ninth aspect, this application provides a chip system. The chip system includes a processor, may further include a memory, and is configured to implement the method in any one of the possible designs of the first aspect and the sixth aspect. The chip system may include a chip, or may include a chip and another discrete component.

According to a tenth aspect, this application further provides a computer-readable storage medium. The computer-readable storage medium stores computer-readable instructions. When the computer-readable instructions are run on a computer, the computer is caused to perform the method in any one of the possible designs of the first aspect to the sixth aspect.

According to an eleventh aspect, this application provides a computer program product including instructions. When the computer program product runs on a computer, the computer is caused to perform the methods in various embodiments of the first aspect to the sixth aspect.

For technical effects that can be achieved in the second aspect to the eleventh aspect, refer to the descriptions of the technical effects that can be achieved in corresponding possible design solutions in the first aspect, the third aspect, and the fifth aspect. Details are not repeated herein again in this application.

### BRIEF DESCRIPTION OF DRAWINGS

FIG. 1 is a diagram of a network architecture according to an embodiment of this application;
FIG. 2 is a diagram of another network architecture according to an embodiment of this application;
FIG. 3 is a diagram of a passive internet of things service;
FIG. 4a is a diagram of an inventory procedure;
FIG. 4b is a diagram of a read/write procedure;
FIG. 5 is a diagram of a service operation procedure of a passive internet of things service;
FIG. 6 is a schematic flowchart of a communication method according to an embodiment of this application;
FIG. 7a to FIG. 7c are a schematic flowchart of a communication method according to an embodiment of this application;
FIG. 8a to FIG. 8c are a schematic flowchart of a communication method according to an embodiment of this application;
FIG. 9 is a schematic flowchart of a communication method according to an embodiment of this application;
FIG. 10a and FIG. 10b are a schematic flowchart of a communication method according to an embodiment of this application;
FIG. 11 is a schematic flowchart of a communication method according to an embodiment of this application;
FIG. 12a to FIG. 12c are a schematic flowchart of a communication method according to an embodiment of this application;
FIG. 13 is a diagram of a structure of a communication apparatus according to an embodiment of this application;
FIG. 14 is a diagram of a structure of a communication apparatus according to an embodiment of this application; and
FIG. 15 is a diagram of a structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two. Therefore, mutual reference may be made between an apparatus implementation and a method implementation. Repeated descriptions are not described.

To cope with challenges of wireless broadband technologies and maintain a leading advantage of a 3rd generation partnership project (3rd generation partnership project, 3GPP) network, the 3GPP standard group formulates a next generation mobile communication network system (Next Generation System) architecture, which is referred to as a 5G network architecture. The architecture not only supports access to a 5G core network (core network, CN) by using a radio access technology (for example, a long term evolution (long term evolution, LTE) access technology or a RAN access technology) defined by the 3GPP standard group, but also supports access to a core network by using a non-3GPP (non-3GPP) access technology by using a non-3GPP conversion function (non-3GPP interworking function, N3IWF) or a next generation access gateway (next generation packet data gateway, ngPDG).

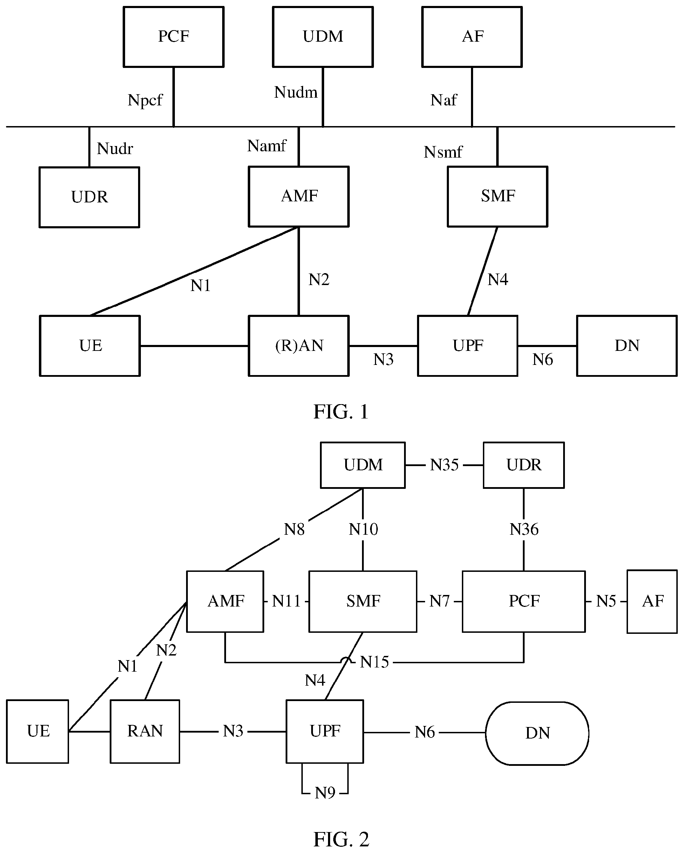

FIG. 1 is a diagram of a 5G network architecture based on a service-based architecture. The 5G network architecture shown in FIG. 1 may include an access network device and a core network device. A terminal accesses a data network (data network, DN) via the access network device and the core network device. The core network device includes but is not limited to a part or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a binding support function (binding support function, BSF) network element (not shown in the figure).

The terminal may be user equipment (user equipment, UE), a mobile station, a mobile terminal, or the like. The terminal may be widely used in various scenarios, for example, a device-to-device (device-to-device, D2D) scenario, a vehicle-to-everything (vehicle-to-everything, V2X) communication scenario, a machine-type communication (machine-type communication, MTC) scenario, an internet of things (internet of things, IoT) scenario, a virtual reality scenario, an augmented reality scenario, an industrial control scenario, an autonomous driving scenario, a telemedicine scenario, a smart grid scenario, a smart furniture scenario, a smart office scenario, a smart wearable scenario, a smart transportation scenario, and a smart city scenario. The terminal may be a mobile phone, a tablet computer, a computer with a wireless transceiver function, a wearable device, a vehicle, an urban air transportation vehicle (for example, an uncrewed aerial vehicle or a helicopter), a ship, a robot, a mechanical arm, a smart home device, or the like.

The access network device may be a base station (base station), a pole site, an indoor base station (for example, a Lampsite), a home base station (for example, a home NB), a micro base station, an integrated access and backhaul (integrated access and backhaul, IAB) node, a mobile base station, a radio access network (RAN) device, or a wireline access network (wireline access network, FAN) device. The radio access network device includes a 3GPP access network device, an untrusted non-3GPP access network device, and a trusted non-3GPP access network device. The 3GPP access network device includes but is not limited to: an evolved NodeB (evolved NodeB, eNodeB) in LTE, a next generation base station (next generation NodeB, gNB) in a 5G mobile communication system, a base station in a future mobile communication system, or a module or unit that completes a part of functions of the base station, for example, a central unit (central unit, CU), a distributed unit (distributed unit, DU), or the like. The untrusted non-3GPP access network device includes but is not limited to: an untrusted non-3GPP access gateway or N3IWF device, an untrusted wireless local area network (wireless local area network, WLAN) access point (access point, AP), a switch, or a router. The trusted non-3GPP access network device includes but is not limited to: a trusted non-3GPP access gateway, a trusted WLAN AP, a switch, or a router. The wireline access network device includes but is not limited to: a wireline access gateway (wireline access gateway), a fixed-line phone network device, a switch, or a router.

The access network device and the terminal may be at fixed locations, or may be movable. The access network device and the terminal may be deployed on land, including an indoor or outdoor device, or a hand-held or a vehicle-mounted device; may be deployed on water; or may be deployed on an airplane, a balloon, and an artificial satellite in the air. Application scenarios of the access network device and the terminal are not limited in embodiments of this application.

The AMF network element includes functions such as mobility management, and access authentication/authorization. In addition, the AMF network element is further responsible for transferring a user policy between the terminal and the PCF network element.

The SMF network element includes functions such as session management, execution of a control policy delivered by a PCF, UPF selection, and assignment of an IP address of a terminal.

The UPF network element includes functions such as completion of user plane data forwarding, session/flow-level-based charging statistics collection, and bandwidth limitation.

The UDM network element includes functions such as subscription data management, and user access authorization.

The UDR network element includes functions such as storage and retrieval of subscription data, policy data, application data, and other types of data.

The NEF network element is configured to support exposure of capabilities and events.

The AF network element transfers a requirement of an application side for a network side, for example, a quality of service (quality of service, QoS) requirement or user status event subscription. The AF may be a third-party function entity, or may be an operator-deployed application service, for example, an IP multimedia subsystem (internet protocol multimedia subsystem, IMS) voice call service. The AF network element includes an AF network element (to be specific, an AF network element of an operator) in a core network and a third-party AF network element (for example, an application server of an enterprise).

The PCF network element includes policy control functions such as being responsible for charging at a session or service flow level, QoS bandwidth assurance and mobility management, and terminal policy decision. The PCF network element includes an access and mobility management policy control network element (access and mobility management policy control function, AM PCF) network device and a session management policy control function (session management PCF, SM PCF) network element. The AM PCF network element is configured to formulate an AM policy for a terminal, and the AM PCF network element may also be referred to as a policy control network element that provides a service for the terminal (PCF for UE). The SM PCF network element is configured to formulate a session management policy (session management policy, SM policy) for a session, and the SM PCF network element may also be referred to as a policy control network element that provides a service for the session (PCF for a PDU session).

The NRF network element may be configured to: provide a network element discovery function, and provide, based on a request of another network element, network element information corresponding to a network element type. The NRF further provides network element management services, for example, network element registration, update, and deregistration, and network element status subscription and push.

The BSF network element may provide functions such as registration/deregistration/update of a BSF service, NRF connection detection, session binding information creation, UE information obtaining, and session binding information query for duplicate IP addresses.

The AUSF network element is responsible for authenticating a user, to determine whether the user or a device is allowed to access a network.

The DN is a network located outside an operator network. The operator network may access a plurality of DNs, and a plurality of services may be deployed on the DN, to provide services such as data and/or a voice for a terminal. For example, the DN is a private network of an intelligent factory, a sensor installed in a workshop of the intelligent factory may be the terminal, a control server of the sensor is deployed in the DN, and the control server can provide a service for the sensor. The sensor may communicate with the control server to obtain instructions of the control server, transfer collected sensor data to the control server according to the instructions, and the like. For another example, the DN is an internal office network of a company, a mobile phone or a computer of an employee in the company may be the terminal, and the mobile phone or the computer of the employee can access information, a data resource, or the like on the internal office network of the company.

In FIG. 1, Npcf, Nurf, Nudm, Naf, Namf, and Nsmf are service-based interfaces provided by the PCF, the UDR, the UDM, the AF, the AMF, and the SMF, respectively, and are configured to invoke corresponding service-based operations. N1, N2, N3, N4, and N6 are interface sequence numbers. Meanings of these interface sequence numbers are as follows.
(1) N1 is an interface between an AMF and a terminal, and may be configured to transfer non-access stratum (non-access stratum, NAS) signaling (for example, including a QoS rule from the AMF) and the like to the terminal.
(2) N2 is an interface between an AMF and an access network device, and may be configured to transfer radio bearer control information from a core network side to the access network device, and the like.
(3) N3 is an interface between an access network device and a UPF, and is mainly configured to transfer uplink and downlink user plane data between the access network device and the UPF.
(4) N4 is an interface between an SMF and a UPF, and may be configured to transfer information between a control plane and a user plane, including delivering of a forwarding rule, a QoS rule, a traffic statistics rule, and the like from the control plane to the user plane, and reporting of user plane information.
(5) N6 is an interface between a UPF and a DN, and is configured to transfer uplink and downlink user data flows between the UPF and the DN.

FIG. 2 is a diagram of a 5G network architecture based on a point-to-point interface. For descriptions of functions of network elements thereof, refer to the descriptions about the functions of the corresponding network elements in FIG. 2. Details are not described again. A main difference between FIG. 2 and FIG. 1 lies in that an interface between control plane network elements in FIG. 1 is a service-based interface, and an interface between control plane network elements in FIG. 2 is a point-to-point interface.

In the architecture shown in FIG. 2, names and functions of interfaces between the network elements are as follows.
(1) For meanings of N1, N2, N3, N4, and N6 interfaces, refer to the foregoing descriptions.
(2) N5 is an interface between an AF network element and a PCF network element, and may be configured to: deliver an application service request and report a network event.
(3) N7 is an interface between a PCF network element and an SMF network element, and may be configured to deliver control policies at a protocol data unit (protocol data unit, PDU) session granularity and a service data flow granularity.
(4) N8 is an interface between an AMF network element and a UDM network element, and may be used by the AMF network element to obtain access and mobility management-related subscription data and authentication data from the UDM network element, used by the AMF network element to register terminal mobility management-related information with the UDM network element, and the like.
(5) N9 is a user plane interface between UPF network elements, and is configured to transfer uplink and downlink user data flows between the UPF network elements.
(6) N10 is an interface between an SMF network element and a UDM network element, and may be used by the SMF network element to obtain session management-related subscription data from the UDM network element, used by the SMF network element to register terminal session-related information with the UDM network element, and the like
(7) N11 is an interface between an SMF network element and an AMF network element, and may be configured to: transfer PDU session tunnel information between an access network device and a UPF, transfer a control message sent to the terminal, transfer radio resource control information to be sent to the access network device, and the like.
(8) N15 is an interface between a PCF network element and an AMF network element, and may be configured to deliver a terminal policy and an access control-related policy.
(9) N35 is an interface between a UDM network element and a UDR network element, and may be used by the UDM network element to obtain user subscription data information from the UDR network element.
(10) N36 is an interface between a PCF network element and a UDR network element, and may be used by the PCF network element to obtain policy-related subscription data and application data-related information from the UDR network element.

It may be understood that the foregoing network elements or functions may be network elements in a hardware device, or may be software functions running on dedicated hardware or virtualized functions instantiated on a platform (for example, a cloud platform). Optionally, the network elements or functions may be implemented by one device, may be jointly implemented by a plurality of devices, or may be a functional module in one device. This is not specifically limited in this embodiment of this application.

A user plane network element, a session management network element, and a mobility management network element in this application may be respectively a UPF network element, an SMF network element, and an AMF network element in a 5G system, or may be network elements in a future communication network, for example, a 6th generation (6th generation, 6G) network, that have functions of the UPF network element, the SMF network element, and the AMF network element. This is not limited in this application. In embodiments of this application, an example in which the UPF network element, the SMF network element, and the AMF network element are respectively the user plane network element, the session management network element, and the mobility management network element is used for description. In addition, the UPF network element, the SMF network element, and the AMF network element are respectively referred to as a UPF, an SMF, and an AMF for short.

For ease of descriptions, in embodiments of this application, a base station (for example, an eNB in 4th (4th generation, 4G), a gNB in 5G, or a base station in future communication) is used as an example of the access network device for description, and a "base station" that appears subsequently may be replaced with an "access network device". In embodiments of this application, UE is used as an example of a terminal for description, and "UE" that appears subsequently may be replaced with a "terminal".

It may be understood that a core network may further include another network function entity. This is not limited in this application.

The technical solutions provided in embodiments of this application may be applied to various communication systems, for example, may be applied to a 5G system, or may be applied to another future-oriented new system, for example, a 6G system. This is not specifically limited in embodiments of this application. In addition, terms "system" and "network" may be interchangeable with each other.

For ease of understanding of embodiments of this application, several basic concepts in embodiments of this application are briefly described.
1. P-IoT: Some network nodes may be passive nodes (for example, passive devices), semi-passive nodes (for example, semi-passive devices), semi-active nodes (for example, semi-active devices), or active nodes (for example, active devices), and obtain energy in a manner of solar energy, radio frequency, wind energy, water energy, or tidal energy. The manner of obtaining the energy is not specifically limited herein. These nodes are not equipped with or do not depend on power supply devices such as batteries, but obtain energy from an environment, to support data perception, transmission, and distributed computing. The network nodes may further store the obtained energy. A passive internet of things architecture may include a terminal, a reader (reader, or may be referred to as a reader/writer), and a server. A passive terminal may be in a tag form, or may be in any other terminal form. This is not limited. The terminal may be passive, semi-passive, semi-active, or active. The terminal may not have an energy storage capability (for example, not have a capacitor), or may have an energy storage capability (for example, have a capacitor to store electric energy). The terminal device may be a passive terminal device, a semi-passive terminal device, or an active terminal device. The reader may be an access network device, for example, a base station, a pole site, a micro base station, or a macro base station. Alternatively, the reader may be a terminal, for example, a mobile phone, an IoT device, or a handheld reader/writer. An example in which the terminal is a tag is used for description herein, but is not limited to the tag. The reader (reader) performs non-contact bidirectional data communication through radio frequency and reads or writes an electronic tag or a radio frequency card (Tag) through the radio frequency, to identify a target and exchange data. One is that when entering an effective identification range of the reader, the tag receives a radio frequency signal sent by the reader, and sends, by using energy obtained from an induced current, information stored in a chip (which corresponds to a passive tag); and the other is that the tag may store a part of electric energy through solar energy or in another manner, so that the tag can actively send a signal of a specific frequency (this may also be referred to as a semi-passive or semi-active tag). The reader receives and decodes information, and then sends decoded information to a central information system for related data processing.

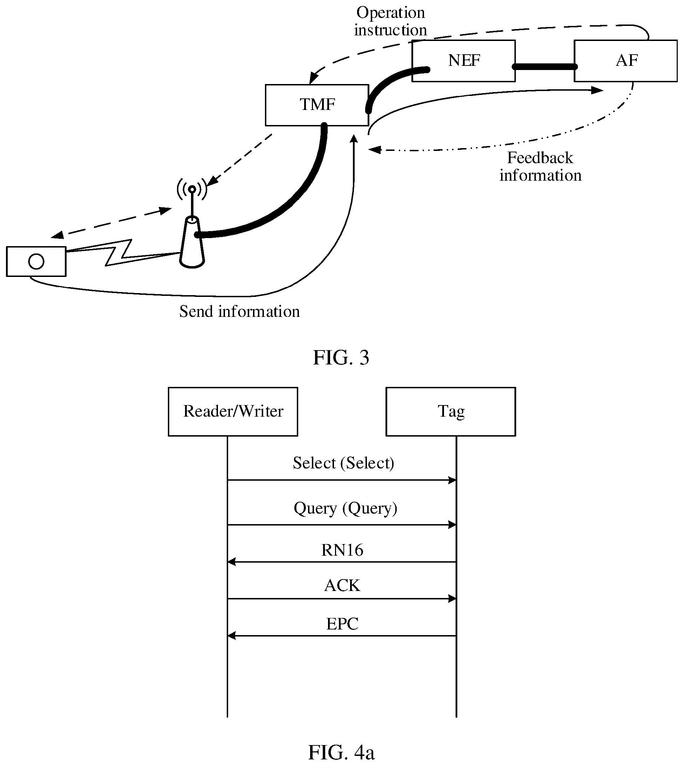

FIG. 3 is a diagram of a passive internet of things service. In FIG. 3, an example in which a reader is a base station (a pole site or a macro base station) is used for description. However, a device form of the reader is not limited in this application.

When executing an operation on a tag, a server may send an operation instruction through a core network (for example, a tag management function TMF, where the TMF may be integrated with a core network device, an access network device, or an application function; may be an independent core network device; or may be an AMF; and the TMF is used in FIG. 3 for illustration). The operation instruction may include an inventory operation (or referred to as an inventory operation) (which may also be understood as obtaining an identifier of the tag, where each tag has an identifier thereof). The identifier of the tag may be allocated by an enterprise (that is, written into the tag when the enterprise prints the tag), or may be allocated by an operator. In a possible implementation, the identifier of the tag may be a globally unique code, for example, an electronic product code (electronic product code, EPC), or may be a temporary identifier or is a non-globally unique identifier. In an inventory procedure, the server may deliver an inventory instruction. The inventory instruction may usually include information such as an identifier range of the tag, an identifier of the reader, and location information. After receiving the inventory instruction, the reader performs inventory on the tag according to the inventory instruction, and sends the identifier of the tag to the server. Alternatively, the server sends an instruction, and the reader forwards the instruction to the tag. The following specifically describes processing logic of different operation types.

The tag learns, based on content of the instruction, that an operation is an inventory operation. The tag sends the identifier of the tag to the reader, and the reader sends the identifier of the tag to the server; or the tag sends the identifier of the tag to the core network through the reader, and the core network sends the identifier of the tag to the server, a read operation (to be specific, performing data reading on the tag). The tag may have a storage function, and a storage area of the tag can store data. If intending to perform a read operation on the tag, the server may send a read instruction. The reader or the core network performs a read operation on the tag according to the instruction, reads the data from the storage area of the tag, and sends the data to the server. The operation instruction includes a write operation (to be specific, performing data writing on the tag). The server may send a write instruction, and the reader or the core network performs, according to the instruction, a write operation on the tag (writes data into the storage area of the tag), and a disable operation (to be specific, invalidating or disabling the tag). The server may send a disable instruction, where the disable instruction may include the identifier of the tag (to be specific, an identifier of a tag that is expected to be disabled or invalidated). The reader or the core network performs an invalidation operation on the tag according to the instruction. After the operation is completed, the tag is invalidated or disabled, and inventory or another operation cannot be performed/executed on the tag. Tag information is obtained (which may be understood as a higher-level description of the foregoing operations (for example, a higher-level description of the inventory operation and the read operation), and whether the server counts the tag or reads tag data is not distinguished, where the operation is for obtaining tag information, and the tag information may be the identifier of the tag or information stored in the storage area of the tag) and an operation of performing information exchange with the tag (which may be understood as a higher-level description of the foregoing operations) is executed. After receiving the instruction sent by the server, the reader performs information or message exchange with the tag, and sends information from the tag to the server. This operation is mainly for a case in which the reader does not view content of the instruction, and is only responsible for forwarding a message sent by the server to the tag and a message sent by the tag to the server. Therefore, in this scenario, the operation executed by the reader on the tag may be understood as an operation of performing message exchange with the tag. The instruction may include area location information, the identifier of the tag, and the like. The base station sends an access instruction to the tag. After random access of the tag succeeds, the base station may send an instruction to the tag (the base station may forward, to the tag, an instruction sent by the core network). The tag obtains or sends corresponding information according to the instruction. For example, when the instruction is an inventory instruction or performing an inventory operation, the tag sends the identifier of the tag; when the instruction is a read instruction or performing a read operation, the tag sends data information stored in the storage area of the tag; and when the instruction is a write instruction or performing a write operation, the tag stores, in the storage area of the tag, the data information that is to be written into the tag and that is included in the instruction. The base station sends (or forwards), to the core network, the information sent by the tag. The core network sends the information to the server. The core network performs an access management operation on the tag based on feedback information of the server.

A manner of sending the instruction by the server may be performing sending through a control plane channel. As shown in FIG. 3, the server sends an instruction to the tag management function or a passive internet of things function. In this case, the server may be an application function (application function, AF), an application server (application server, AS), or a passive internet of things application function (P-IoT AF). In a possible implementation, the P-IoT AF sends an instruction to the tag management function or the passive internet of things function. In another possible implementation, the P-IoT AF sends an instruction to the tag management function or the passive internet of things function via a control plane device. The control plane device may be an NEF, an SMF, a PCF, a UDM, a network slice-specific and SNPN (standalone non-public network) authentication and authorization function (network slice-specific and SNPN authentication and authorization function, NSSAAF), or an AMF. In addition, the server may further send an instruction to the reader through a user plane channel. In a possible implementation, the server sends an instruction to the base station through the UPF. In a possible implementation, the server sends an instruction to the tag management function or the passive internet of things function via a user plane device (UPF) and through the SMF, and the tag management function or the passive internet of things function sends the instruction to the tag via a RAN device. In another possible implementation, the server sends the instruction to the reader via the user plane device and the access network device, for example, the RAN device (when the reader is a terminal). In a possible implementation, the tag management function or the passive internet of things function may be deployed together with or co-deployed with the core network device, the access network device, or the application function. When two devices or functions are co-deployed, interaction between the two functions or devices provided in this embodiment of this application becomes an internal operation of an integrated function or device or may be omitted.

### 2. Tag-based random access operation procedure

In an implementation, for a tag inventory procedure, in the inventory procedure, the tag needs to perform random access (step 1 to step 4) in FIG. 4a, and send an EPC code to a reader/writer after the random access succeeds, so that the reader/writer can learn which tags are within coverage of the reader/writer. The information may be finally reported by the reader/writer to middleware and a server. A read/write procedure is roughly as follows.

Step 1: The reader/writer receives an inventory command delivered by the server (where the inventory command may be delivered by the server to the middleware, and then delivered by the middleware to the reader/writer); generates a Select command, where the command carries a tag range (for example, EPC codes of some specific ranges); and delivers the Select command. After monitoring the Select command, the tag determines whether the tag belongs to the tag range that needs to be determined in the Select command. If the tag belongs to the tag range, the tag feeds back information after monitoring a Query command subsequently. If the tag does not belong to the tag range, the tag does not execute any action subsequently.

Step 2: The reader/writer sends the Query command, where the Query command may include a value (denoted as a Q value); and the tag generates a random number based on the Q value, for example, generates a random number between 0 to a Q^{th} power of 2. Then, the tag subtracts 1 from the random number each time the reader/writer sends a Query or QueryRep instruction. When the random number is decreased to zero, the tag may initiate random access.

Step 3: When finding that the tag belongs to the tag range selected in the Select command, the tag feeds back a random number RN16 (which may be understood as a random number with a length of 16 bits) to the reader/writer in a contention manner (for example, sending the random number RN16 to the reader/writer when the random number is decreased to zero in step 2).

Step 4: After receiving the random number sent by the tag, the reader/writer sends an ACK command, where the command includes the just received random number (RN16).

Step 5: After receiving the ACK command sent by the reader and authenticating that the random number is correct, the tag may feed back the EPC code of the tag to the reader/writer, to complete the inventory procedure.

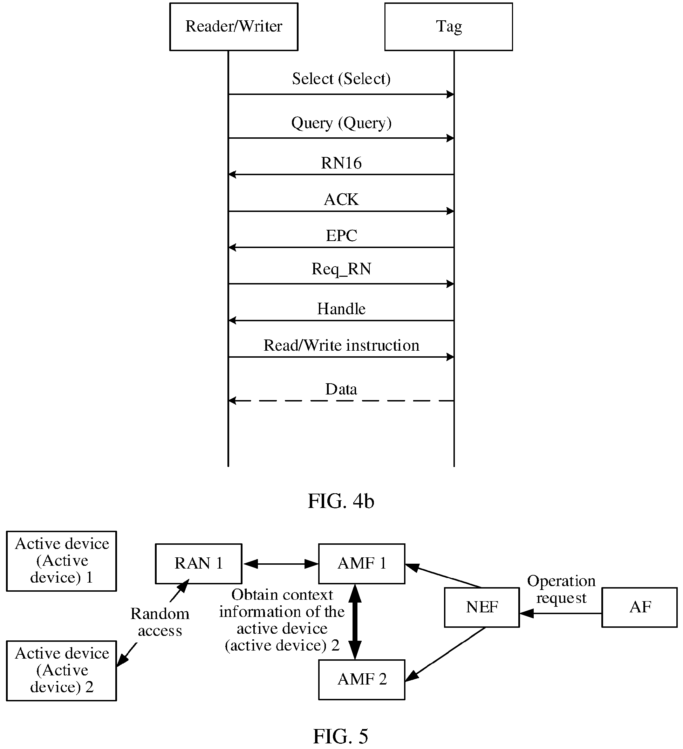

For a tag read/write procedure, in the read/write procedure, the reader/writer may set the tag range in the Select command as a range of tags on which reading/writing needs to be performed (for example, if the range in the Select command is a specific EPC code, a read/write operation may be executed on a tag corresponding to the EPC code). Step 1 to step 5 in FIG. 4b are an inventory procedure, but the inventory procedure is not an inventory procedure of a group of tags, but inventory performed on a specific tag. A procedure starting from step 6 is the read/write procedure, which is roughly as follows.

Step 6: The reader/writer sends a Req_RN command to the tag, where the Req_RN command carries the previously received random number RN16.

Step 7: If authenticating that the random number is correct, the tag sends a handle to the reader/writer. The handle needs to be carried in a subsequent read/write procedure.

Step 8: The reader/writer sends a read or write command to the tag, where the command needs to carry the handle. If the command is a write instruction, the command further needs to carry data to be written into a storage area of the tag.

Step 9: If the command in step 8 is a read instruction, the tag needs to feed back data that is in the storage area of the tag, and further needs to carry the handle.

It should be noted that a disable procedure of the tag is similar to this. In step 8, the tag performs disabling after receiving a disable instruction, and then optionally feeds back the handle in step 9.

In a data processing procedure of a multicast/broadcast service (multicast/broadcast service, MBS), each RAN device transmits only sessions with different TMGIs (group identifiers). After a session with a specific TMGI has been activated, if an activation request of a session with the same TMGI is still received, activation of the session is rejected. However, in P-IoT services, the RAN device cannot perceive group identifiers requested by core networks. As a result, a TMGI-based determining mechanism of the MBS cannot be reused.

As shown in FIG. 5, when an active device is registered with a core network, in consideration of AMF load balancing, different tags served by a same RAN device may be registered with different AMFs. As shown in FIG. 5, an active device 1 is registered with an AMF 1 via a RAN device 1, an active device 2 is registered with an AMF 2 via the RAN device 1, the AMF 1 maintains context information of the active device 1, and the AMF 2 maintains context information of the active device 2. Subsequently, when an AF initiates an operation request, an NEF determines to forward the operation request to the AMF 1 and the AMF 2. If the RAN device 1 rejects a downlink instruction from the AMF 2, a subsequent operation is to be executed by the AMF 1 after the active device 2 performs random access. However, in this case, the AMF 1 does not have the context information of the active device 2, and consequently cannot perform security authentication on the active device 2. Therefore, the AMF 1 needs to request, from the AMF 2, the context information of the active device 2, leading to additional signaling exchange.

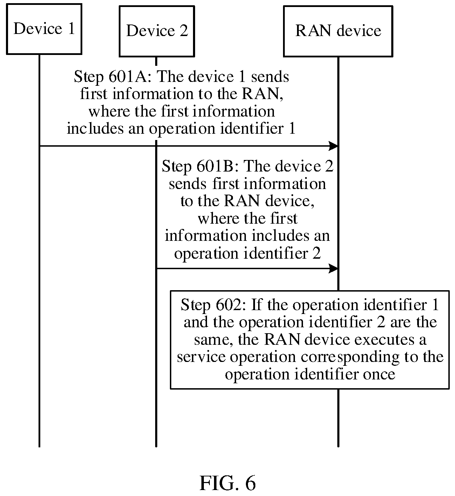

In view of this, this application provides a communication method, to avoid executing a same operation instruction a plurality of times by a RAN device in P-IoT services, thereby further reducing signaling exchange between core network devices. The method may be implemented through data exchange between an access network device and a first device. The access network device may be a RAN device, a TRP, a gNB, a pole site, a micro base station, an indoor pole site, an IAB node, or the like, or may be a chip configured to implement a function of the access network device. The first device may be a control plane device, a user plane device, or a service requester. The first device may be an access and mobility management function (access and mobility management function, AMF), a session management function (session management function, SMF), a tag management function (tag management function, TMF), a policy control function (policy control function, PCF), a network exposure function (network exposure function, NEF), a unified data management (unified data management, UDM), a unified data repository (unified data repository, UDR), or the like. This is not specifically limited herein in this application. In FIG. 6, an example in which first devices are a device 1 and a device 2, and an access network device is a RAN device is used for illustration. In actual application, a quantity of first devices and whether types of the first devices are the same (for example, the device 1 is an AMF, and the device 2 is also an AMF; or the device 1 is an AMF, and the device 2 is a TMF, where the foregoing is merely an example for description, and does not constitute any specific limitation) are not limited. Refer to FIG. 6. Steps are performed as follows.

Step 601A: The device 1 sends first information to the RAN device, where the first information includes an operation identifier 1.

Step 601B: The device 2 sends first information to the RAN device, where the first information includes an operation identifier 2.

Step 601A and step 601B are not performed in a particular sequence. The two steps may be performed simultaneously. This is not specifically limited herein in this application. If the device 1 and the device 2 are not devices of a same type, the first information may be carried in different signaling for sending. For example, if the device 1 is a service requester, the first information may be carried in a service request (service request) message for sending; and if the device 2 is an AMF, the first information may be carried in an N2 message for sending. This is merely an example for description, and does not constitute any specific limitation on a type of signaling for sending the first information to the RAN device. If the device 1 and the device 2 are devices of a same type, the first information may be carried in same signaling for sending. For example, if the device 1 is an AMF 1, and the device 2 is an AMF 2, the first information may be carried in an N2 message for sending. This is merely an example for description, and does not constitute any specific limitation on a type of signaling for sending the first information to the RAN device.

In addition, the operation identifier 1 and the operation identifier 2 each indicate information about a corresponding service operation. It may be understood as that an operation identifier is determined based on information about a service operation, but the operation identifier does not include information specifically included in the information about the service operation. There is usually a correspondence between the operation identifier and the information about the service operation. The information about the service operation usually includes a service operation requested by the service requester to be executed for an area (where operation types of the service operation include inventory operation, read operation, write operation, interaction operation, disable operation, positioning operation, and the like). For example, information 1 about a service operation is an inventory operation of a service requester 1 for an area 1, and a service operation identifier determined based on the information about the service operation is the operation identifier 1. In this case, the operation identifier 1 indicates the information 1 about the service operation. If simultaneously receiving two operation identifiers 1, the access network device executes only once the service operation corresponding to the operation identifier 1, to be specific, performs inventory on a corresponding terminal that is of the service requester 1 and that is in the area 1.

Specifically, the information about the service operation may indicate at least one type of the following information: service requester, operation type, to-be-operated range, and request time point of the service operation.

Information about the service requester is indicated by at least one type of the following information: identifier of the service requester, IP address of the service requester, MAC address of the service requester, and port number of the service requester. The to-be-operated range is a to-be-operated area of the service requester or an identifier of a to-be-operated group of the service requester. The to-be-operated area may be indicated by at least one type of the following information: information about a cell (Cell) that is covered by an access network device and that is of the to-be-operated area, information about a tracking area (TA) in which the to-be-operated area is located, and information about a geographical location of the to-be-operated area. The identifier of the to-be-operated group of the service requester may be an externally defined identifier, or may be an internally defined identifier agreed upon between devices, for example, a TMGI. The operation types include inventory operation, read operation, write operation, interaction operation, disable operation, positioning operation, and the like. The request time point of the service operation is a time point at which the service requester initiates a service request.

The operation identifier 1 may be determined by the device 1 based on the information about the service operation, or may be received from another device. A source of the operation identifier is not specifically limited herein in this application. For example, if an NEF selects two AMFs (the AMF 1 and the AMF 2) for an inventory request (for the area 1) from an AF 1, operation ID (operation identifier)=1 is generated and sent to the AMF 1 and the AMF 2; and if the NEF selects two AMFs (the AMF 1 and the AMF 2) for a read request (for the area 1) from an AF 2, operation ID=2 is generated.

For example, the device 1 and the device 2 are devices of a same type and are both first core network devices (for example, AMFs), and the first core network device may receive an operation identifier from a second core network device (for example, an NEF). Specifically, the second core network device may receive first information from a service requester, where the first information includes an operation identifier and information about a service operation. The first core network device may determine the operation identifier based on the first information. It is clear that the second core network device may further receive second information from the service requester, where the second information includes the information about the service operation. The second core network device generates the operation identifier based on the information about the service operation. Details about how to determine the operation identifier are not specifically limited herein in this application, and may be configured flexibly based on an actual application requirement. For example, the information about the service operation is read information from the AF 1, inventory is performed on a device in an area TA 1, and the NEF constructs operation ID=1 (that is, the operation identifier). In this case, the NEF determines to select two AMFs in the TA 1: the AMF 1 and the AMF 2, and separately sends operation ID=1 (that is, the operation identifier) to the AMF 1 and the AMF 2. After a period of time, the NEF receives a write operation that is for the TA 1 and that is from the AF 1, constructs operation ID=2, and separately sends operation ID=2 to the AMF 1 and the AMF 2. After another period of time, although an operation type is still write operation, because request time points are different, the NEF constructs operation ID=3. This is merely an example for description herein, and does not constitute any specific limitation on a manner of constructing the operation identifier.

In addition, the first information may further include the information about the service operation, random access indication information (for example, indicating a terminal in the to-be-operated range to perform random access), mask information (if receiving the mask information and determining, by parsing the mask information, that an identifier of the terminal matches an identifier in the mask information, the terminal performs random access), and the like. This is not specifically limited herein.

Step 602: If the operation identifier 1 and the operation identifier 2 are the same, the RAN device executes once the service operation corresponding to the operation identifier.

In actual application, that the RAN device executes the service operation may be understood as that the RAN device feeds back an identifier of a terminal (for example, an identifier of a terminal that successfully performs random access) only to a core network device, and the core network device executes a specific service operation, for example, a read operation or a write operation, on the terminal based on the identifier of the terminal; or may be understood as that after a terminal successfully performs random access, the RAN device sends a specific operation instruction to the terminal, to execute a specific service operation, and then feeds back, to a core network device, an operation result, for example, an identifier of a terminal for which a read operation is successful or an identifier of a terminal for which a write operation is successful. This is not specifically limited herein in this application. How the RAN device executes the service operation may be flexibly determined based on an actual application situation.

An example in which the device 1 and the device 2 are first core network devices (namely, AMFs) is used for description herein. Specifically, during actual execution, the following two manners may be included.

### Manner 1: The RAN device selects an uplink AMF based on an identifier of a terminal.

If operation identifiers in at least two pieces of first information are the same (to be specific, the operation identifier 1 and the operation identifier 2 are the same), the RAN device broadcasts random access information once. The RAN device obtains information about the terminal that performs random access, where the information about the terminal includes the identifier of the terminal; determines, based on the identifier of the terminal, a first target core network device associated with the terminal, where the first target core network device is one of at least two first core network devices; and sends the information about the terminal to the first target core network device. Subsequently, the first target network device may execute the service operation, for example, a read operation or a write operation, on the terminal based on the information about the service operation.

The random access information includes: indicating a passive internet of things device within coverage of the access network device to perform random access to the access network device. Optionally, indicating the passive internet of things device within the coverage to perform random access further includes: indicating, to perform random access to the access network device, an internet of things device that meets a mask range and that is within the coverage.

Optionally, after sending the information about the terminal to the first target core network device, the access network device may further reject another core network device among the at least two first core network devices. A possible form is sending a rejection message to the another core network device among the at least two first core network devices.

In this application, when determining that operation identifiers from a plurality of core network devices are the same, the access network device executes only once a service operation corresponding to the operation identifier, and may broadcast random access information only once. In this manner, executing a same operation instruction a plurality of times can be avoided. In addition, the access network device selects, based on information about a terminal that performs random access, a core network device for uplink transmission, thereby avoiding exchanging context information of the terminal between the plurality of core network devices (to be specific, a case in which the AMF 1 requests the context from the AMF in FIG. 5), and avoiding performing security authentication, based on the obtained context information of the terminal, on the terminal that performs random access. Once obtaining the information about the terminal that performs random access, the access network device may select, based on the information about the terminal, a core network device associated with the terminal, and sends, to the selected core network device, information obtained by executing the service operation on the terminal. In this manner, signaling exchange between the plurality of core network devices are reduced, and signaling resources can be saved.

The following uses a specific example for description. In actual application, the terminal may be a terminal in the foregoing passive internet of things services, for example, a passive device, a semi-passive device, a semi-active device, or an active device. This is not specifically limited herein in this application. An example in which the terminal is an active device is merely used for description herein. It is clear that this is also applicable to another type of terminal.

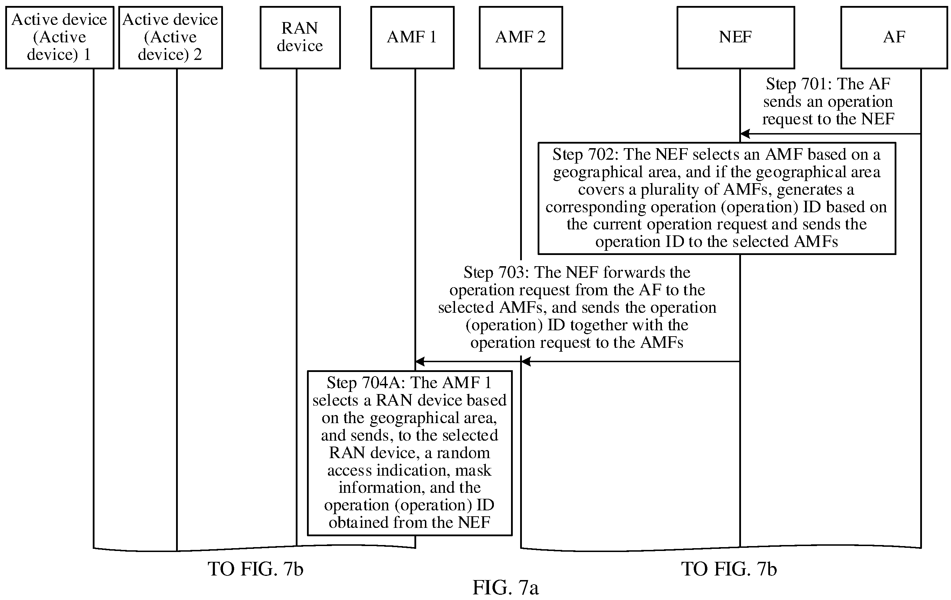

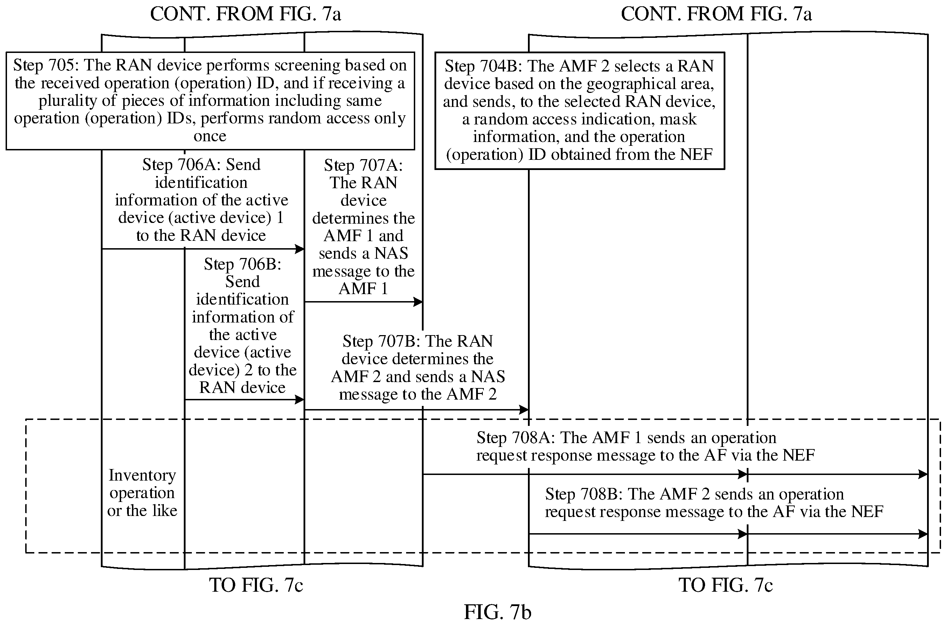

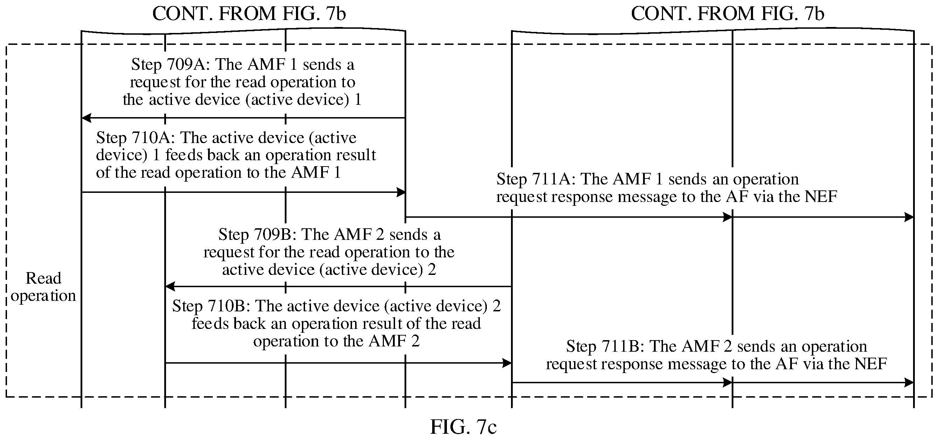

Refer to FIG. 7a to FIG. 7c. Data exchange between an active device 1, an active device 2, a RAN device, an AMF 1, an AMF 2, an NEF, and an AF (namely, a service requester) is used for description. It is assumed that context information of the active device 1 is registered with the AMF 1, and context information of the active device 2 is registered with the AMF 2. Steps are performed as follows.

Step 701: The AF sends an operation request to the NEF.

Specifically, the operation request may be sent by using a request message service request. If the operation request is an operation request at a geographical location granularity, the operation request includes operation type, to-be-operated area, and identifier of the AF. If the operation request is an operation request at a group granularity, the operation request includes operation type, identifier of a to-be-operated group, and identifier of the AF. For understanding, refer to the descriptions about the information about the service requester in step 601. Details are not described herein again.

Step 702: The NEF selects an AMF based on a geographical area (the to-be-operated area or the identifier of the to-be-operated group), and if the geographical area covers a plurality of AMFs, generates a corresponding operation ID (namely, an operation identifier) based on the current operation request and sends the operation ID to the selected AMFs.

In a possible implementation, the AMF is selected by the AF and then provided for the NEF, and the AF constructs the operation ID and sends the operation ID to the selected AMF via the NEF.

In another possible implementation, the AMF is selected by the AF and then provided for the NEF, and the NEF generates the operation ID based on the current operation request and sends the operation ID to the selected AMF.

In addition, the operation ID is generated only when the AF or the NEF selects a plurality of AMFs. If that only one AMF is selected based on a current operation is found, the operation ID may not be generated. For details about how to construct the operation ID, refer to the foregoing descriptions for understanding. The details are not described herein again.

Step 703: The NEF forwards, to the selected AMFs, the operation request from the AF, and sends the operation ID together with the operation request to the AMFs (in FIG. 7a to FIG. 7c, the AMFs are the AMF 1 and the AMF 2).

Specifically, when the NEF forwards the operation request, if the operation request is an operation request at a geographical location granularity, the NEF may obtain information about a corresponding TA/cell based on geographical location information, replace the original geographical location information (for example, longitude and latitude), and send the information about the corresponding TA/cell to the AMF 1 and the AMF 2; or if the operation request is an operation request at a group granularity, the NEF may convert an external group identifier external group ID into an internal group identifier internal group ID.

Step 704A: The AMF 1 selects a RAN device based on the geographical area, and sends, to the selected RAN device, a random access indication, mask information, and the operation ID obtained from the NEF (that is, content of first information).

In a possible implementation, the AMF 1 sends an N2 message to the selected RAN device, where the N2 message carries the random access indication, to indicate the RAN device to broadcast a select command that carries a mask; and further carries the operation ID. The mask may usually include one or more of the following: network identifier, user identifier, and sequence number (sequence number of a passive internet of things device). After receiving the mask, the passive internet of things device determines whether a network identifier, a user identifier, and/or a sequence number of the passive internet of things device are/is consistent with the information in the received mask. If the network identifier, the user identifier, and/or the sequence number of the passive internet of things device are/is consistent with the information in the received mask, the passive internet of things device performs a random access procedure in response to a query command after the selection.

In another possible implementation, the AMF 1 sends an N2 message to the selected RAN device, where the N2 message carries a paging message, the paging message indicates the RAN device to page a device, and the paging message carries a mask, so that the RAN device sends the mask to a passive internet of things device during paging. The mask may directly exist in the paging message, or may exist in the N2 message as an independent information element. This is not specifically limited herein.

Step 704B: The AMF 2 selects a RAN device based on the geographical area, and sends, to the selected RAN device, a random access indication, mask information, and the operation ID obtained from the NEF (that is, content of the first information).

For understanding of step 704B, refer to step 704A. Details are not described herein again.

Step 705: The RAN device performs screening based on the received operation ID, and if receiving a plurality of pieces of information including a same operation ID, performs random access only once.

Step 706A: After accessing the RAN device, the active device 1 sends identification information of the active device 1 to the RAN device, for example, an S-TMSI or a GUAMI, and sends a NAS message, where the NAS message includes the identification information of the active device 1.

Step 706B: After accessing the RAN device, the active device 2 sends identification information of the active device 2 to the RAN device, for example, an S-TMSI or a GUAMI, and sends a NAS message, where the NAS message includes the identification information of the active device 2.

Step 707A: The RAN device determines the AMF 1 based on the identification information of the active device 1 in step 706A, and sends the NAS message to the AMF 1.

Step 707B: The RAN device determines the AMF 2 based on the identification information of the active device 2 in step 706B, and sends the NAS message to the AMF 2.

If the operation type is inventory operation, disable operation, positioning operation, or the like, steps are performed as follows.

Step 708A: The AMF 1 sends an operation request response message to the AF via the NEF.

Specifically, the operation request response message may be sent by using a request message service response, and includes the identification information of the active device 1.

Step 708B: The AMF 2 sends an operation request response message to the AF via the NEF.

Specifically, the operation request response message may be sent by using a request message service response, and includes the identification information of the active device 2.

If the operation type is read operation, write operation, or the like, and an example in which the operation type is read operation is used for description herein, steps are performed as follows.

Step 709A: The AMF 1 sends a request for the read operation to the active device 1.

Step 709B: The AMF 2 sends a request for the read operation to the active device 2.

Step 710A: The active device 1 feeds back an operation result of the read operation to the AMF 1.

Specifically, the operation result includes the identification information of the active device 1 for which the read operation is successful. In the figure, the active device 1 is merely used as an example for description. However, in actual application, a plurality of active devices (where context information of the active devices is stored in the AMF 1) may access the RAN device, but not all the plurality of active devices can be read.

Step 710B: The active device 2 feeds back an operation result of the read operation to the AMF 2.

Step 711A: The AMF 1 sends an operation request response message to the AF via the NEF.

Specifically, the operation request response message may be sent by using a request message service response, and includes the identification information of the active device 1 for which the read operation is successful.

Step 711B: The AMF 2 sends an operation request response message to the AF via the NEF.

Specifically, the operation request response message may be sent by using a request message service response, and includes identification information of the active device 2 for which a read operation is successful.

It should be noted that AF-NEF-AMF/TMF-RAN device in FIG. 7a to FIG. 7c are merely an architecture selection, and an architecture like AF-UPF-SMF-AMF/TMF-RAN device, AF-AMF/TMF-RAN device, or AF-RAN device is also applicable to complete this embodiment. This is not specifically limited herein in this application.

### Manner 2: The RAN device rejects an operation instruction from any AMF.

If operation identifiers in at least two pieces of first information are the same, the RAN device executes a service operation corresponding to an operation identifier from a second target core network device among at least two first core network devices, and rejects to execute a service operation corresponding to an operation identifier from another core network device among the at least two core network devices other than the second target core network device, where the second target core network device is one of the at least two first core network devices.

Optionally, the RAN device sends, to the another first core network device, information indicating a repeated service operation. In this way, repeatedly sending an operation instruction can be avoided, and redundancy of information transmission between the core network devices can be reduced. When determining that operation identifiers from a plurality of first core network devices are the same, the access network device executes only a service operation corresponding to an operation identifier from one of the at least two first core network devices, and rejects a service operation corresponding to an operation identifier from another first core network device among the at least two first core network devices. In this manner, executing a same operation instruction a plurality of times can be avoided. However, in this manner, the access network device randomly selects an operation instruction from an AMF for rejection. Refer to FIG. 7a to FIG. 7c. The RAN device 1 rejects the downlink instruction from the AMF 2, and the subsequent operation is to be executed by the AMF 1 after the active device 2 performs random access. In this case, the AMF 1 does not have the context information of the active device 2, and consequently cannot perform security authentication on the active device 2. Therefore, the AMF 1 needs to request, from the AMF 2, the context information of the active device 2, leading to additional signaling exchange.

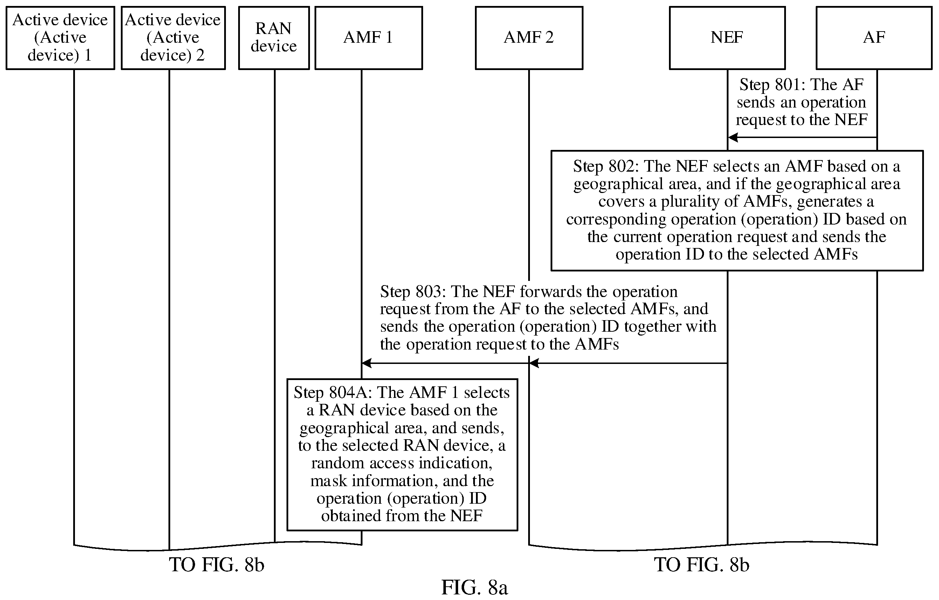

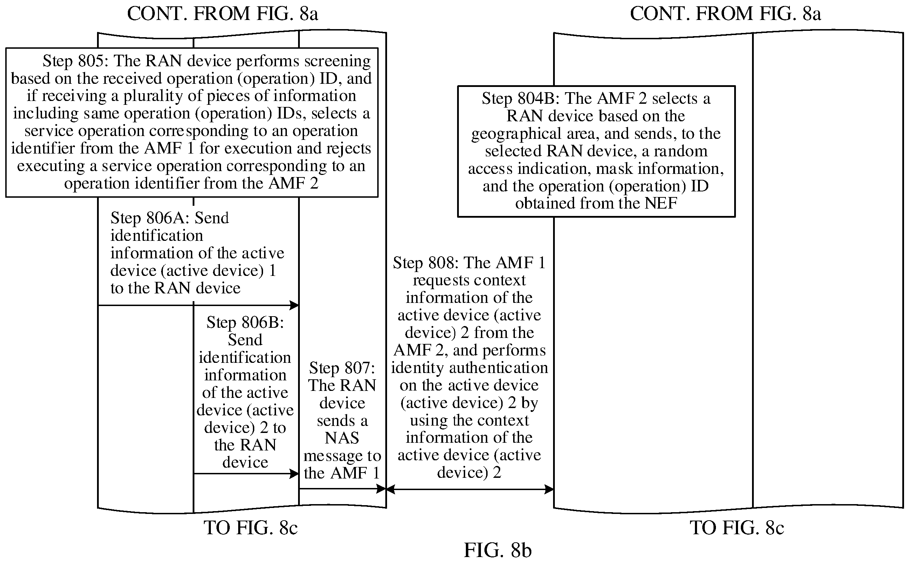

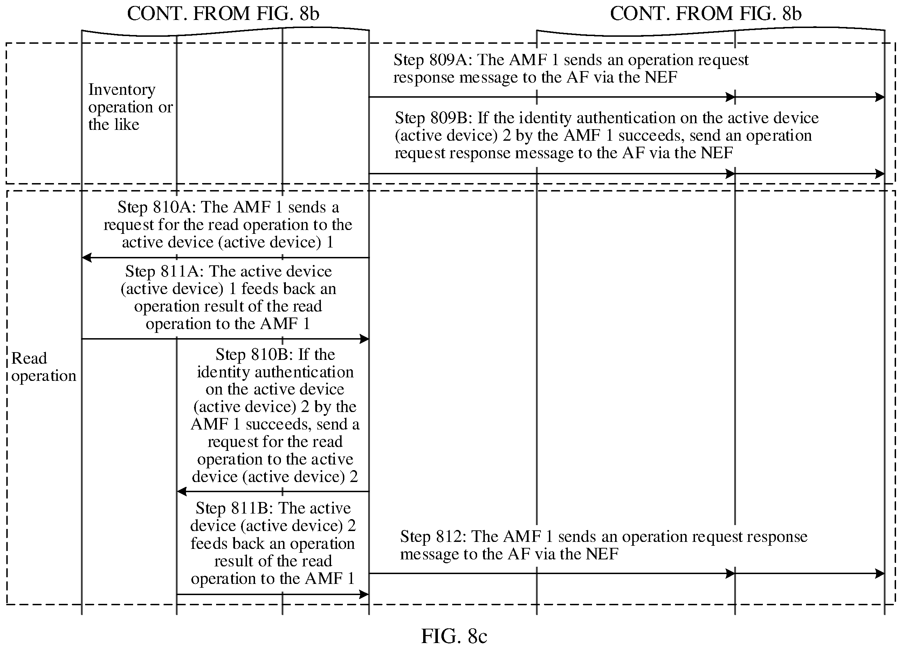

It can be learned that, in an embodiment shown in FIG. 8a to FIG. 8c, if determining that operation identifiers in at least two pieces of first information are the same, an access network device randomly selects an operation instruction from a core network device for execution (when sending an operation identifier to the access network device, the core network device usually also includes an operation instruction, where the operation instruction may include an area for which a service requester requests an operation, a service type of the requested service operation, and the like, and details are not described herein), and then may broadcast random access information once; obtains information about a terminal that performs random access, where the information about the terminal includes an identifier of the terminal; and determines, based on the identifier of the terminal, a core network device associated with the terminal (to be specific, a core network device that stores context information of the terminal), where the core network device associated with the terminal is one of at least two core network devices. If the core network device associated with the terminal is the foregoing randomly selected core network device, the access network device sends the information about the terminal to the core network device associated with the terminal. If the core network device associated with the terminal is not the foregoing randomly selected core network device, the randomly selected core network device needs to request the context information of the terminal from the core network device associated with the terminal, and perform identity authentication on the terminal based on the context information of the terminal. After the authentication succeeds, the access network device sends the information about the terminal to the randomly selected core network device. Subsequently, the core network device executes the service operation, for example, a read operation or a write operation, on the terminal based on information about the service operation.

The random access information includes: indicating a passive internet of things device within coverage of the access network device to perform random access to the access network device. Optionally, indicating the passive internet of things device within the coverage to perform random access further includes: indicating, to perform random access to the access network device, an internet of things device that meets a mask range and that is within the coverage.

In this application, when determining that operation identifiers from a plurality of core network devices are the same, the access network device executes only a service operation corresponding to an operation identifier from one of the at least two core network devices, and rejects a service operation corresponding to an operation identifier of another core network device among the at least two core network devices. In this manner, executing a same operation instruction a plurality of times can be avoided.

In an optional manner, after rejecting to execute a service operation corresponding to an operation identifier from another core network device among the at least two core network devices other than a second target core network device, the RAN device further sends indication information to the another core network device, where the indication information indicates that the service operation corresponding to the operation identifier from the another core network device is a repeated service operation.

In this application, the access network device can avoid, based on the information indicating the repeated service operation, repeatedly executing a random access instruction, thereby reducing redundancy of operations of the access network device.

Refer to FIG. 8a to FIG. 8c. Data exchange between an active device 1, an active device 2, the RAN device, an AMF 1, an AMF 2, an NEF, and an AF (namely, the service requester) is used for description. It is assumed that context information of the active device 1 is registered with the AMF 1, and context information of the active device 2 is registered with the AMF 2. Steps are performed as follows.

Step 801: The AF sends an operation request to the NEF.

Step 802: The NEF selects an AMF based on a geographical area (a to-be-operated area or an identifier of a to-be-operated group), and if the geographical area covers a plurality of AMFs, generates a corresponding operation ID (namely, the operation identifier) based on the current operation request and sends the operation ID to the selected AMFs.

Step 803: The NEF forwards, to the selected AMFs, the operation request from the AF, and sends the operation ID to the AMFs together with the operation request (in FIG. 8a to FIG. 8c, the AMFs are the AMF 1 and the AMF 2).

Step 804A: The AMF 1 selects a RAN device based on the geographical area, and sends, to the selected RAN device, a random access indication, mask information, and the operation ID obtained from the NEF (that is, content of first information).

Step 804B: The AMF 2 selects a RAN device based on the geographical area, and sends, to the selected RAN device, a random access indication, the mask information, and the operation ID obtained from the NEF (that is, the content of the first information).

For understanding of step 801 to step 804B, refer to step 701 to step 704B. Details are not described herein again.

Step 805: The RAN device performs screening based on the received operation ID, and if receiving a plurality of pieces of information including a same operation ID (that is, operation IDs in the AMF 1 and the AMF 2 are the same), selects a service operation corresponding to an operation identifier from the AMF 1 for execution and rejects to execute a service operation corresponding to an operation identifier from the AMF 2.

Optionally, a data value indicating a repeated operation may be sent to the AMF 2, and the data value indicates that the service operation corresponding to the operation ID in the AMF 2 has been executed.

Step 806A: After accessing the RAN device, the active device 1 sends identification information of the active device 1 to the RAN device, for example, an S-TMSI or a GUAMI, and sends a NAS message, where the NAS message includes the identification information of the active device 1.

Step 806B: After accessing the RAN device, the active device 2 sends identification information of the active device 2 to the RAN device, for example, an S-TMSI or a GUAMI, and sends a NAS message, where the NAS message includes the identification information of the active device 2.

Step 807: The RAN device sends the NAS message to the AMF 1.

Step 808: The AMF 1 requests the context information of the active device 2 from the AMF 2, and authenticates an identity of the active device 2 by using the context information of the active device 2.

If an operation type is inventory operation, disable operation, positioning operation, or the like, steps are performed as follows.

Step 809A: The AMF 1 sends an operation request response message to the AF via the NEF.

Specifically, the operation request response message may be sent by using a request message service response, and includes the identification information of the active device 1.

Step 809B: If the authentication of the AMF 1 on the identity of the active device 2 succeeds, send an operation request response message to the AF via the NEF.

Specifically, the operation request response message may be sent by using a request message service response, and includes the identification information of the active device 2.

If the operation type is read operation, write operation, or the like, and an example in which the operation type is read operation is used for description herein, steps are performed as follows.

Step 810A: The AMF 1 sends a request for the read operation to the active device 1.

Step 810B: If the authentication of the AMF 1 on the identity of the active device 2 succeeds, send a request for the read operation to the active device 2.

Step 811A: The active device 1 feeds back an operation result of the read operation to the AMF 1.

Specifically, the operation result includes the identification information of the active device 1 for which the read operation is successful. In the figure, the active device 1 is merely used as an example for description. However, in actual application, a plurality of active devices (where context information of the active devices is stored in the AMF 1) may access the RAN device, but not all the plurality of active devices can be read.

Step 811B: The active device 2 feeds back an operation result of a read operation to the AMF 1.

Step 812: The AMF 1 sends an operation request response message to the AF via the NEF.

Specifically, the operation request response message may be sent by using the request message service response, and includes the identification information of the active device 1 for which the read operation is successful and identification information of the active device 2 for which a read operation is successful.

It should be noted that AF-NEF-AMF/TMF-RAN device in FIG. 8a to FIG. 8c are merely an architecture selection, and an architecture like AF-UPF-SMF-AMF/TMF-RAN device, AF-AMF/TMF-RAN device, or AF-RAN device is also applicable to complete this embodiment. This is not specifically limited herein in this application.

Therefore, in comparison with Manner 1, in Manner 2, more signaling is exchanged and more signaling resources are consumed. In addition, when step 602 is performed, a preset period of time may be further set. If same operation identifiers are received in the preset period of time, a service operation corresponding to the operation identifier is executed once. For example, the preset period of time is 10 minutes. If a plurality of same operation identifiers are received in the 10 minutes, a service operation corresponding to the operation identifier is executed once. If one same operation identifier is received after 10 minutes, the service operation corresponding to the operation identifier is executed again. Specific execution needs to be flexibly selected based on an actual application requirement, and is not specifically limited herein in this application.

In this application, an operation identifier indicates information about a corresponding service operation. If an access network device receives at least two same operation identifiers, it is considered that a plurality of same operation instructions are received, and the access network device executes only once a service operation corresponding to the operation identifier. In this way, executing the same operation instruction a plurality of times and consequently reporting a plurality of same operation results can be avoided, and information redundancy can be avoided. In addition, signaling exchanged between access network devices can be reduced, thereby further saving signaling resources and improving data processing efficiency.

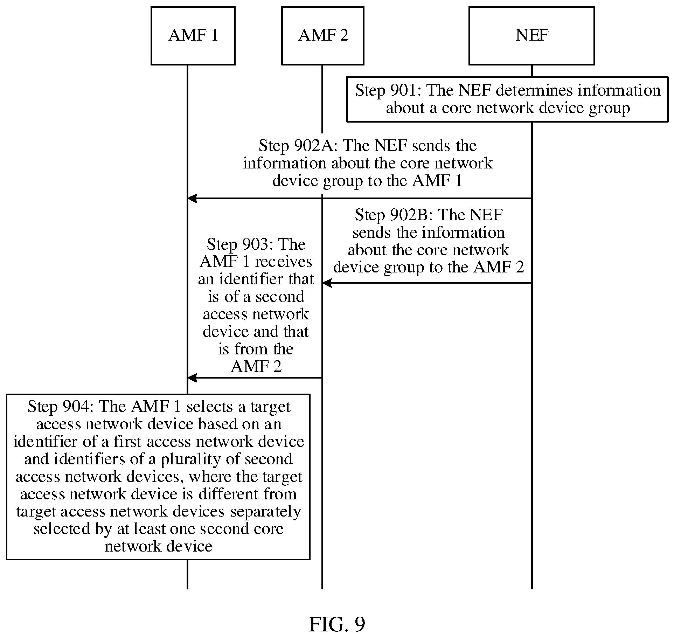

In actual application, in addition to using operation identifiers, executing the same operation instruction a plurality of times can be avoided by selecting different RAN devices through negotiation between core network devices (which may be AMFs, TMFs, or the like, where a first core network device and a second core network device are used as an example for description herein, and the first core network device and the second core network device are devices of a same type, for example, both are AMFs). In this case, the RAN devices receive different operation instructions, and therefore receiving same operation instructions does not occur. Refer to FIG. 9. An example in which a first core network device is an AMF 1, a second core network device is an AMF 2, and a third core network device is an NEF is used for description, where there may be a plurality of second core network devices, the AMF 2 is merely used as an example herein for description, and a quantity of second core network devices is not specifically limited herein. Steps are performed as follows.

Step 901: The NEF determines information about a core network device group, where the core network device group includes the first core network device and at least one second core network device.

Specifically, the NEF may receive request information from a service requester, where the request information includes information about a service operation, and the information about the service operation indicates information about a to-be-operated area of the service operation (which may be understood as that the information about the service operation includes the information about the to-be-operated area of the service operation, or may be understood as that the information about the service operation indicates the information about the to-be-operated area of the service operation by using specific information, where this is not specifically limited herein in this application; for understanding, refer to the information about the to-be-operated area in step 601B; and details are not described herein again); and determine the information about the core network device group based on the information about the to-be-operated area.

Step 902A: The NEF sends the information about the core network device group to the AMF 1, where the core network device group includes the first core network device and the at least one second core network device.

Step 902B: The NEF sends the information about the core network device group to the AMF 2.

In an embodiment, the NEF may separately send a first message to the AMF 1 and the AMF 2. The first message carries a message of the core network device group, and it is clear that the first message may further carry an operation identifier, where the operation identifier indicates the information about the corresponding service operation. For understanding, refer to the descriptions about the operation identifier in FIG. 6. Details are not described herein again.

Step 903: The AMF 1 receives an identifier that is of a second access network device and that is separately sent by the at least one second core network device, where one second access network device is a candidate device of one corresponding second core network device. In FIG. 9, an example in which an identifier that is of a second access network device and that is from the AMF 2 is received is used for description.

Optionally, before performing step 903, the AMF 1 may further send an identifier of a first access network device to the at least one second core network device. The first access network device is a candidate device of the first core network device.

Step 904: The AMF 1 selects a target access network device based on the identifier of the first access network device and identifiers of a plurality of second access network devices, where the target access network device is different from a target access network device separately selected by the at least one second core network device.

For example, identifiers that are of second access network devices and that are from the AMF 2 are RAN device 1, RAN device 2, or RAN device 3, and identifiers that are of first access network devices and that are from the AMF 1 is RAN device 1, RAN device 3, or RAN device 4. In this case, to avoid a conflict between RAN devices selected by the AMFs, the AMF 1 may select the RAN device 4 as the target access network device.

Optionally, before performing step 903, the AMF 1 may further send the identifier of the first access network device to the at least one second core network device. The first access network device is the candidate device of the first core network device. In this case, the AMF 2 may also select a RAN device that does not conflict with that of the AMF 1.

In addition, it should be further noted that in actual application, after determining the identifier that is of the first access network device and that is selected by the AMF 1, the AMF 1 may send the identifier to the AMF 2, and the AMF 2 determines an identifier that is of the second access network device and that does not conflict with the identifier of the first access network device.

In this application, the first core network device and the second core network device negotiate to select access network devices. This can avoid a case in which a same access network device receives operation instructions from different core network devices, thereby avoiding executing the same operation instruction a plurality of times.

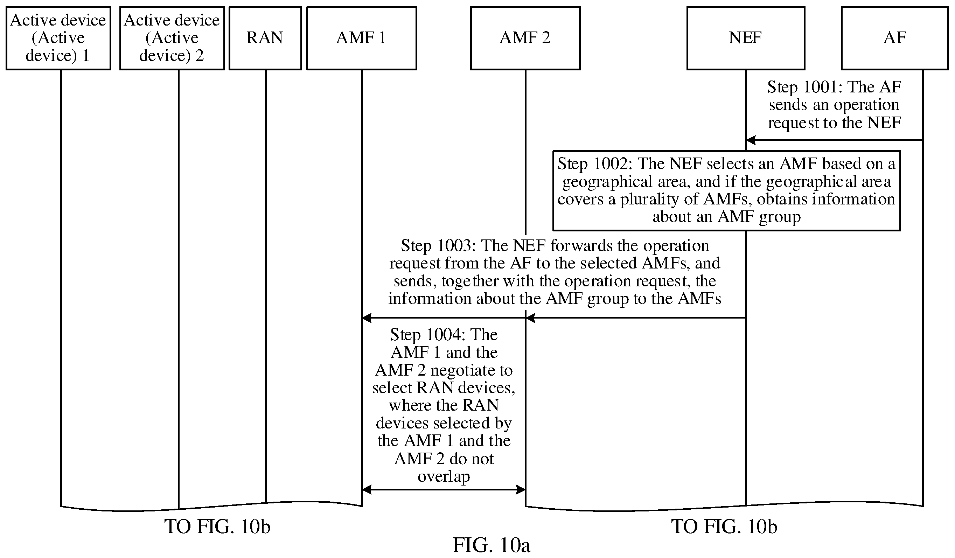

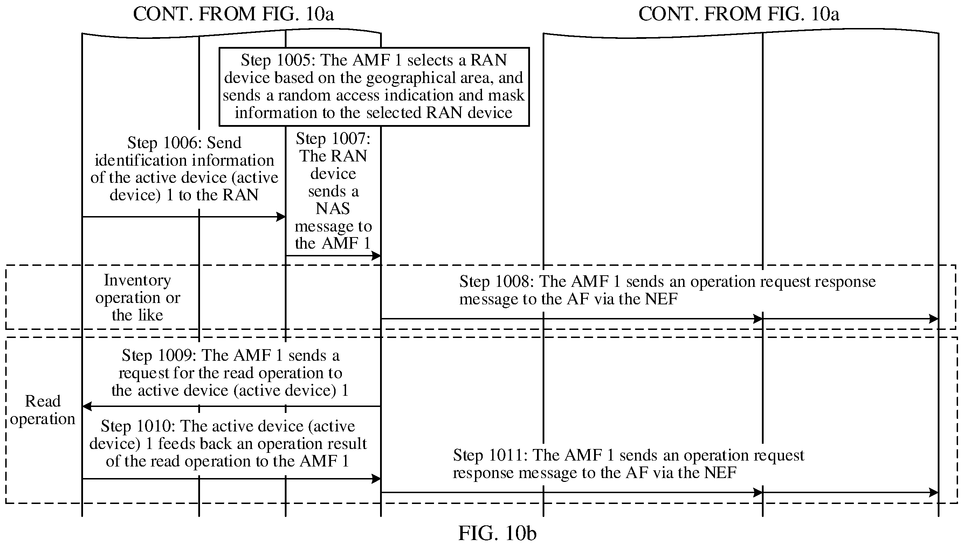

Specifically, refer to FIG. 10a and FIG. 10b. Data exchange between an active device 1, a RAN device, an AMF 1, an AMF 2, an NEF, and an AF (namely, a service requester) is used for description. It is assumed that context information of the active device 1 is registered with the AMF 1. Steps are performed as follows.

Step 1001: The AF sends an operation request to the NEF.

Step 1002: The NEF selects an AMF based on a geographical area (a to-be-operated area or an identifier of a to-be-operated group), and if the geographical area covers a plurality of AMFs, obtains information about an AMF group.

Step 1003: The NEF forwards, to the selected AMFs, the operation request from the AF, and sends, together with the operation request, the information about the AMF group to the AMFs (in FIG. 10a and FIG. 10b, the AMFs are the AMF 1 and the AMF 2).

For understanding of step 1001 to step 1003, refer to step 701 to step 703. Details are not described herein again.

Step 1004: The AMF 1 and the AMF 2 negotiate to select RAN devices, where the RAN devices selected by the AMF 1 and the AMF 2 do not overlap.

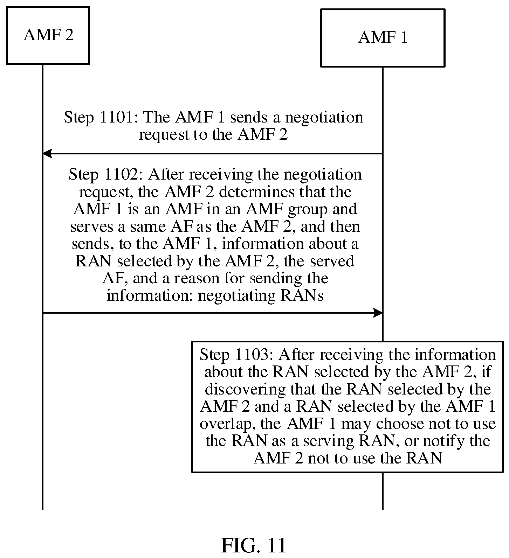

For understanding of a process of the negotiation between the AMF 1 and the AMF 2, refer to FIG. 11. Steps are performed as follows.

Step 1101: The AMF 1 sends a negotiation request to the AMF 2.

Optionally, the negotiation request includes information about a RAN device selected by the AMF 1, and the negotiation request may be in a context of per AF. The context of per AF includes a served AF and a reason for sending the negotiation request: negotiating RAN devices. Optionally, the negotiation request may further carry an operation ID (namely, an operation identifier, where for understanding, refer to the foregoing descriptions, and details are not described herein again), so that the AMF 1 and the AMF 2 determine that the AMF 1 and the AMF 2 negotiate the RAN devices for a same service operation.

Step 1102: After receiving the negotiation request, the AMF 2 determines that the AMF 1 is an AMF in the AMF group and serves a same AF as the AMF 2, and then sends, to the AMF 1, information about a RAN device selected by the AMF 2, the served AF, and the reason for sending the information: negotiating the RAN devices.

Optionally, the operation ID is carried.

Step 1103: After receiving the information about the RAN device selected by the AMF 2, if finding that the RAN device selected by the AMF 2 and the RAN device selected by the AMF 1 overlap, the AMF 1 may choose not to use the RAN device as a serving RAN device, or notify the AMF 2 not to use the RAN device.

The following uses operations related to the AMF 1 as an example for description. For the AMF 2, refer to descriptions for understanding. Details are not described.

Step 1005: The AMF 1 sends a random access indication and mask information to the selected RAN device.

Step 1006: After accessing the RAN device, the active device 1 sends identification information of the active device 1 to the RAN device, for example, an S-TMSI or a GUAMI, and sends a NAS message, where the NAS message includes the identification information of the active device 1.

Step 1007: The RAN device sends the NAS message to the AMF 1.

If an operation type is inventory operation, disable operation, positioning operation, or the like, steps are performed as follows.

Step 1008: The AMF 1 sends an operation request response message to the AF via the NEF.

Specifically, the operation request response message may be sent by using a request message service response, and includes the identification information of the active device 1.

If the operation type is read operation, write operation, or the like, and an example in which the operation type is read operation is used for description herein, steps are performed as follows.

Step 1009: The AMF 1 sends a request for the read operation to the active device 1.

Step 1010: The active device 1 feeds back an operation result of the read operation to the AMF 1.

Specifically, the operation result includes the identification information of the active device 1 for which the read operation is successful. In the figure, the active device 1 is merely used as an example for description. However, in actual application, a plurality of active devices (where context information of the active devices is stored in the AMF 1) may access the RAN device, but not all the plurality of active devices can be read.

Step 1011: The AMF 1 sends an operation request response message to the AF via the NEF.

Specifically, the operation request response message may be sent by using the request message service response, and includes the identification information of the active device 1 for which the read operation is successful.

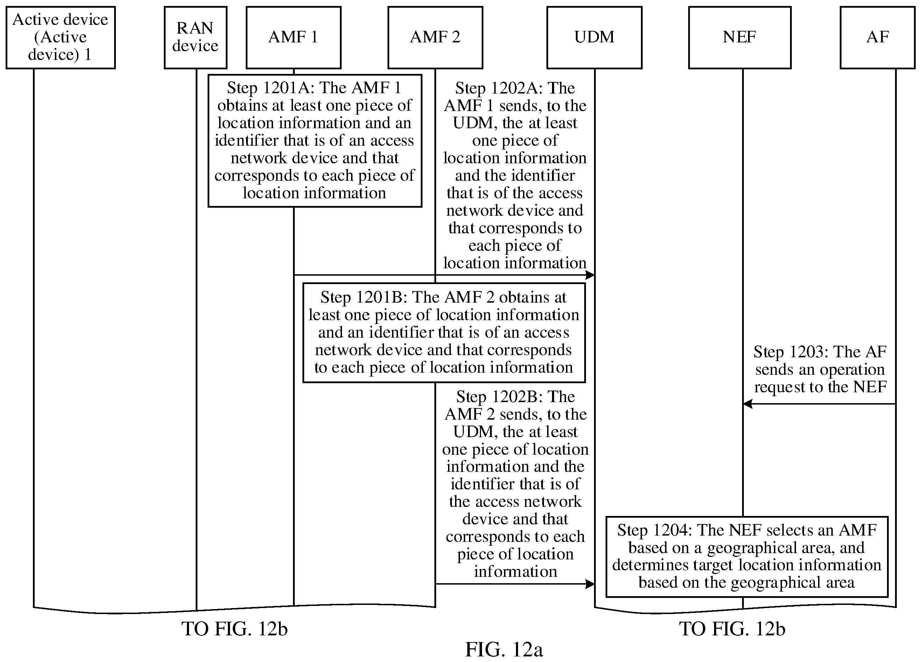

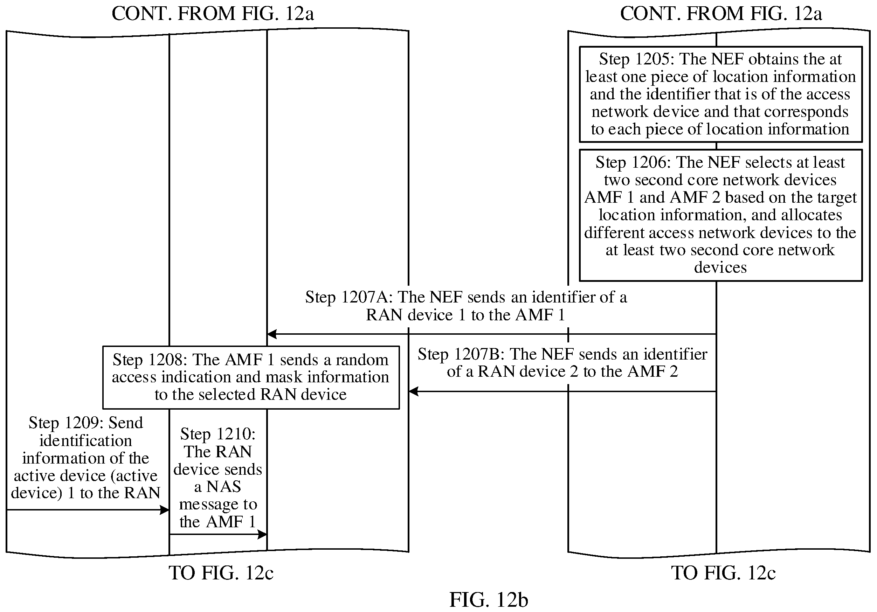

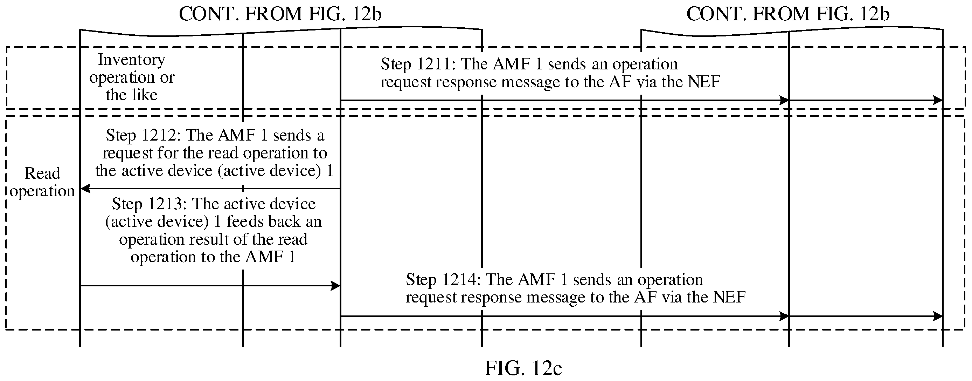

In actual application, in addition to using operation identifiers and selecting different RAN devices through negotiation between AMFs, executing a same operation instruction a plurality of times can be avoided by directly allocating different RAN devices to different AMFs by the NEF. Refer to FIG. 12a to FIG. 12c. An example in which a first core network device is an NEF, second core network devices are an AMF 1 and an AMF 2, and a data management network element is a UDM is used for description, where there may be a plurality of second core network devices, the AMF 1 and the AMF 2 are merely used as an example for description herein, and a quantity of second core network devices is not specifically limited herein. Steps performed by an active device 1, a RAN device, the AMF 1, the AMF 2, the UDM, an NEF, and an AF (namely, a service requester) are as follows.

Step 1201A: The AMF 1 obtains at least one piece of location information and an identifier that is of an access network device and that corresponds to each piece of location information.

For example, identifiers of access network devices corresponding to a geographical location 1 are RAN device 1 or RAN device 2. When establishing a connection to a core network (for example, when powered on), the access network device provides information about the access network device for a core network device (for example, an AMF), including information about a TA (or geographical location information or the like) supported by the access network device, and optionally, may further provide capability information, to indicate that the access network device can support a passive internet of things operation. The foregoing information may be provided by the access network device for the AMF by using an NG setup procedure in conventional technologies, so that the AMF obtains the foregoing information.

Step 1201B: The AMF 2 obtains at least one piece of location information and an identifier that is of an access network device and that corresponds to each piece of location information.

Step 1202A: The AMF 1 sends, to the UDM, the at least one piece of location information and the identifier that is of the access network device and that corresponds to each piece of location information.

Step 1202B: The AMF 2 sends, to the UDM, the at least one piece of location information and the identifier that is of the access network device and that corresponds to each piece of location information.

Step 1203: The AF sends an operation request to the NEF. For understanding, refer to step 701 in FIG. 7a. Details are not described herein again.

Step 1204: The NEF selects an AMF based on a geographical area (a to-be-operated area or an identifier of a to-be-operated group), and determines target location information based on the geographical area (for example, information about the to-be-operated area).

Step 1205: The NEF obtains the at least one piece of location information and the identifier that is of the access network device and that corresponds to each piece of location information.

Specifically, the NEF may receive first information from the NEF, to obtain the at least one piece of location information and the identifier that is of the access network device and that corresponds to each piece of location information, where the first information includes the at least one piece of location information and the identifier that is of the access network device and that corresponds to each piece of location information, or may receive the first information from another core network device. This is not specifically limited herein.

Step 1206: The NEF selects at least two second core network devices AMF 1 and AMF 2 based on the target location information, and allocates different access network devices to the at least two second core network devices based on an identifier that is of an access network device and that corresponds to the target location information (for example, allocates the RAN device 1 to the AMF 1, and allocates the RAN device 2 to the AMF 2), where the at least two second core network devices are located in a location area corresponding to the target location information, and the target location information is one of the at least one piece of location information.

Step 1207A: The NEF sends an identifier of the RAN device 1 to the AMF 1.

Step 1207B: The NEF sends an identifier of the RAN device 2 to the AMF 2.

The following uses operations related to the AMF 1 as an example for description. For the AMF 2, refer to descriptions for understanding. Details are not described.

Step 1208: The AMF 1 sends a random access indication and mask information to a selected RAN device.

Step 1209: After accessing the RAN device, the active device 1 sends identification information of the active device 1 to the RAN device, for example, an S-TMSI or a GUAMI, and sends a NAS message, where the NAS message includes the identification information of the active device 1.

Step 1210: The RAN device sends the NAS message to the AMF 1.

If the operation type is inventory operation, disable operation, positioning operation, or the like, steps are performed as follows.

Step 1211: The AMF 1 sends an operation request response message to the AF via the NEF.

Specifically, the operation request response message may be sent by using a request message service response, and includes the identification information of the active device 1.

If the operation type is read operation, write operation, or the like, and an example in which the operation type is read operation is used for description herein, steps are performed as follows.

Step 1212: The AMF 1 sends a request for the read operation to the active device 1.

Step 1213: The active device 1 feeds back an operation result of the read operation to the AMF 1.

Specifically, the operation result includes the identification information of the active device 1 for which the read operation is successful. In the figure, the active device 1 is merely used as an example for description. However, in actual application, a plurality of active devices (where context information of the active devices is stored in the AMF 1) may access the RAN device, but not all the plurality of active devices can be read.

Step 1214: The AMF 1 sends an operation request response message to the AF via the NEF.

Specifically, the operation request response message may be sent by using the request message service response, and includes the identification information of the active device 1 for which the read operation is successful.

In this application, the first core network device obtains the at least one piece of location information and the identifier that is of the access network device and that corresponds to each piece of location information, and allocates different access network devices to different second core network devices based on this. This can avoid a case in which a same access network device receives operation instructions from different core network devices, thereby avoiding executing the same operation instruction a plurality of times.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

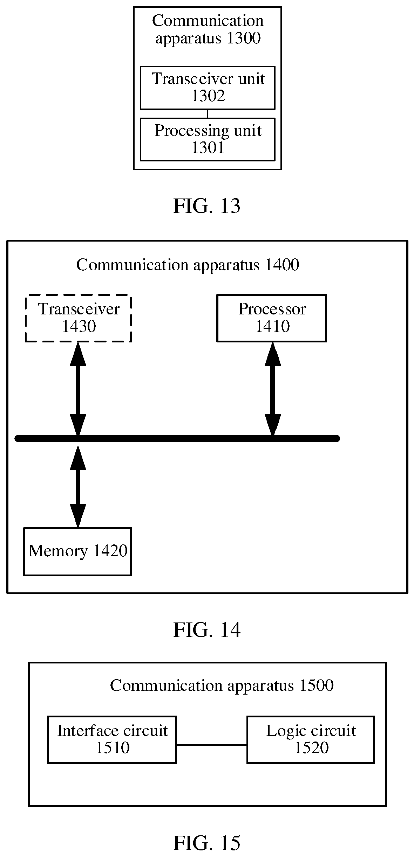

When the integrated unit is used, FIG. 13 is a possible example block diagram of a communication apparatus according to an embodiment of this application. As shown in FIG. 13, the communication apparatus 1300 may include a processing unit 1301 and a transceiver unit 1302. The processing unit 1301 is configured to control and manage an action of the communication apparatus 1300. The transceiver unit 1302 is configured to support communication between the communication apparatus 1300 and another device. Optionally, the transceiver unit 1302 may include a receiving unit and/or a sending unit, respectively configured to perform a receiving operation and a sending operation. Optionally, the communication apparatus 1300 may further include a storage unit, configured to store program code and/or data of the communication apparatus 1300. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, and may also be referred to as an interface, a communication interface, an interface circuit, or the like; and the processing unit may be a processor, a processing circuit, a logic circuit, or the like. Specifically, the apparatus may be the foregoing access network device, the core network device, or the like.

In an implementation, the communication apparatus is the access network device. The transceiver unit 1302 is configured to receive at least two pieces of first information, where each piece of first information includes an operation identifier, and the operation identifier indicates information about a corresponding service operation. The processing unit 1301 is configured to execute once, if operation identifiers in the at least two pieces of first information are the same, the service operation corresponding to the operation identifier.

In an optional manner, the transceiver unit 1302 is specifically configured to receive the first information from the at least two core network devices.

In an optional manner, the processing unit 1301 is specifically configured to: if the operation identifiers in the at least two pieces of first information are the same, broadcast random access information once; obtain information about a terminal that performs random access, where the information about the terminal includes an identifier of the terminal; determine, based on the identifier of the terminal, a first target core network device associated with the terminal, where the first target core network device is one of the at least two core network devices; and send the information about the terminal to the first target core network device.

In an optional manner, the processing unit 1301 is specifically configured to: if the operation identifiers in the at least two pieces of first information are the same, execute a service operation corresponding to an operation identifier from a second target core network device among the at least two core network devices, and reject to execute a service operation corresponding to an operation identifier from another core network device among the at least two core network devices other than the second target core network device, where the second target core network device is one of the at least two core network devices.

In an optional manner, the transceiver unit 1302 is further configured to send indication information to the core network device, where the indication information indicates that the service operation corresponding to the operation identifier of the core network device is a repeated service operation.

In another embodiment, the communication apparatus is the first core network device, and the first core network device may be an NEF or the like. The processing unit 1301 is configured to determine an operation identifier, where the operation identifier indicates information about a corresponding service operation. The transceiver unit 1302 is configured to send the operation identifier.

In an optional manner, the transceiver unit 1302 is specifically configured to send the operation identifier to at least two second core network devices (where the second core network device may be an AMF, a TMF, or the like).

In an optional manner, the transceiver unit 1302 is configured to receive first information from a service requester, where the first information includes the operation identifier and the information about the service operation. The processing unit 1301 is configured to determine the operation identifier based on the first information.

In an optional manner, the transceiver unit 1302 is configured to receive second information from the service requester, where the second information includes the information about the service operation. The processing unit 1301 is configured to generate the operation identifier based on the information about the service operation.

In an optional manner, the information about the service operation indicates at least one type of the following information: service requester, operation type, to-be-operated range, and request time point of the service operation.

In still another embodiment, the communication apparatus is the first core network device, and the first core network device may be an AMF, a TMF, or the like. The transceiver unit 1302 is configured to: obtain information about a core network device group, where the core network device group includes the first core network device and at least one second core network device (which may be an AMF, a TMF, or the like, where the first core network device and the second core network device are devices of a same type, for example, both are AMFs); and separately receive an identifier that is of a second access network devices and that is separately sent by the at least one second core network device, where one second access network device is a candidate device of one corresponding second core network device. The processing unit 1301 is configured to select a target access network device based on an identifier of a first access network device and identifiers of a plurality of second access network devices, where the target access network device is different from a target access network device separately selected by the at least one second core network device, and the first access network device is a candidate device of the first core network device.

In an optional manner, the transceiver unit 1302 is further configured to send the identifier of the first access network device to the at least one second core network device.

In an optional manner, the transceiver unit 1302 is specifically configured to: receive first information from a third core network device (where the third core network device may be an NEF or the like), where the first information includes the information about the core network device group; and obtain the information about the core network device group based on the first information.

In still another embodiment, the communication apparatus is a third core network device, and the third core network device may be an NEF or the like. The processing unit 1301 is configured to determine information about a core network device group, where the core network device group includes a first core network device and at least one second core network device (where the first core network device and the second core network device may be AMFs, TMFs, or the like, and the first core network device and the second core network device are devices of a same type, for example, both are AMFs). The transceiver unit 1302 is configured to send the information about the core network device group to the first core network device.

In an optional manner, the transceiver unit 1302 is specifically configured to receive request information from a service requester, where the request information includes information about a service operation, and the information about the service operation indicates information about a to-be-operated area of the service operation. The processing unit 1301 is configured to determine the information about the core network device group based on the information about the to-be-operated area.

In an optional manner, the transceiver unit 1302 is further configured to send first information to the first core network device, where the first information includes the information about the core network device group.

In an optional manner, the first information further includes an operation identifier, and the operation identifier indicates the information about the corresponding service operation.

In an optional manner, the information about the service operation indicates at least one type of the following information: service requester, operation type, to-be-operated range, and request time point of the service operation.

In still another embodiment, the communication apparatus is the first core network device, and the first core network device may be an NEF. The transceiver unit 1302 is configured to obtain at least one piece of location information and an identifier that is of an access network device and that corresponds to each piece of location information. The processing unit 1301 is configured to: select at least two second core network devices based on target location information, where the at least two second core network devices are located in a location area corresponding to the target location information; and allocate different identifiers of access network devices to the at least two second core network devices based on an identifier that is of an access network device and that corresponds to the target location information, where the target location information is one of the at least one piece of location information. The transceiver unit 1302 is further configured to: send, respectively to the at least two second core network devices, identifiers that are of access network devices and that are allocated by the first core network device.

In an optional manner, the transceiver unit 1302 is further configured to receive first information from a data management network element, where the first information includes the at least one piece of location information and the identifier that is of the access network device and that corresponds to each piece of location information.

In an optional manner, the transceiver unit 1302 is further configured to receive request information from a service requester, where the request information includes information about a service operation, and the information about the service operation indicates information about a to-be-operated area of the service operation; and determines the target location information based on the information about the to-be-operated area.

In still another embodiment, the communication apparatus is the second core network device, and the second core network device may be an AMF, a TMF, or the like. The transceiver unit 1302 is configured to: obtain at least one piece of location information and an identifier that is of an access network device and that corresponds to each piece of location information; send, to a data management network element, the at least one piece of location information and the identifier that is of the access network device and that corresponds to each piece of location information; and receive an identifier of a first access network device and from a first core network device, where the identifier of the first access network device is an identifier that is of an access network device and that corresponds to target location information, the target location information is one of the at least one piece of location information, and the second core network device is located in a location area corresponding to the target location information.

FIG. 14 shows a communication apparatus 1400 further provided in this application. The communication apparatus 1400 may be a chip or a chip system. The communication apparatus may be located in a device in any one of the foregoing method embodiments, for example, the access network device or the first core network device, to perform an action corresponding to the device.

Optionally, the chip system may include a chip, or may include a chip and another discrete component.

The communication apparatus 1400 includes a processor 1410.

The processor 1410 is configured to execute a computer program stored in a memory 1420, to implement an action of each device in any one of the foregoing method embodiments.

The communication apparatus 1400 may further include the memory 1420, configured to store the computer program.

Optionally, the memory 1420 is coupled to the processor 1410. The coupling may be an indirect coupling or a communication connection between apparatuses, units, or modules in an electrical form, a mechanical form, or another form, and is used for information exchange between the apparatuses, the units, or the modules. Optionally, the memory 1420 and the processor 1410 and are integrated together.

There may be one or more processors 1410 and one or more memories 1420. This is not limited.

Optionally, in actual application, the communication apparatus 1400 may include or may not include a transceiver 1430. The transceiver 1430 is illustrated by using a dashed-line box in the figure. The communication apparatus 1400 may exchange information with another device through the transceiver 1430. The transceiver 1430 may be a circuit, a bus, a transceiver, or any other apparatus that may be configured to exchange information.

In a possible implementation, the communication apparatus 1400 may be the access network device or the first core network device in the foregoing method embodiments.

A specific connection medium between the transceiver 1430, the processor 1410, and the memory 1420 is not limited in this embodiment of this application. In this embodiment of this application, the memory 1420, the processor 1410, and the transceiver 1430 are connected through a bus in FIG. 14. The bus is represented by a bold line in FIG. 14. A manner of connection between other components is merely used for illustrative description. This is not limited thereto. The bus may be classified into an address bus, a data bus, a control bus, and the like. For ease of representation, only one bold line is used in FIG. 14 for representation, but this does not mean that there is only one bus or only one type of bus. In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the method disclosed with reference to embodiments of this application may be directly performed and completed by a hardware processor, or may be performed and completed by using a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. Alternatively, the memory in this embodiment of this application may be a circuit or any other apparatus that can implement a storage function, and is configured to store a computer program, program instructions, and/or data.

Based on the foregoing embodiments, refer to FIG. 15. An embodiment of this application further provides another communication apparatus 1500, including an interface circuit 1510 and a logic circuit 1520. The interface circuit 1510 may be understood as an input/output interface, and may be configured to perform receiving and sending steps of each device in any one of the foregoing method embodiments. The logic circuit 1520 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments is implemented. The computer-readable storage medium may include any medium that can store program code, for example, a USB flash drive, a removable hard disk drive, a read-only memory, a random access memory, a magnetic disk, or an optical disc.

Based on the foregoing embodiments, an embodiment of this application provides a communication system. The communication system includes the access network device (for example, the RAN device) and the core network device (for example, the AMF, the NEF, or the UDM) in any one of the foregoing method embodiments, and may be configured to perform the method performed by each device in any one of the foregoing method embodiments.

In addition, the communication system may further include a terminal (for example, UE). The terminal may perform data exchange with an access network device and a core network device, to perform a related method in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or the block diagrams of the method, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by a computer or the processor of the another programmable data processing apparatus generate an apparatus for implementing a specified function in one or more procedures in the flowcharts and/or in one or more blocks in the block diagrams.

These computer program instructions may be alternatively stored in a computer-readable memory that can indicate the computer or the another programmable data processing apparatus to operate in a specific manner, so that the instructions stored in the computer-readable memory generate an artifact that includes an instruction apparatus. The instruction apparatus implements a specified function in one or more procedures in the flowcharts and/or in one or more blocks in the block diagrams.

These computer program instructions may alternatively be loaded onto the computer or the another programmable data processing apparatus, so that a series of operation steps are performed on the computer or another programmable apparatus to generate computer-implemented processing. Therefore, the instructions executed on the computer or the another programmable apparatus provide steps for implementing a specified function in one or more procedures in the flowcharts and/or in one or more blocks in the block diagrams.

## Claims

1. A communication method, applied to an access network device, and comprising:
receiving at least two pieces of first information, wherein each piece of first information comprises an operation identifier, and the operation identifier indicates information about a corresponding service operation; and
executing once, if operation identifiers in the at least two pieces of first information are the same, the service operation corresponding to the operation identifier.

2. The method according to claim 1, wherein the receiving the at least two pieces of first information comprises:
receiving the first information from at least two core network devices.

3. The method according to claim 2, wherein the executing once, if the operation identifiers in the at least two pieces of first information are the same, the service operation corresponding to the operation identifier comprises:
if the operation identifiers in the at least two pieces of first information are the same, broadcasting random access information once;
obtaining information about a terminal that performs random access, wherein the information about the terminal comprises an identifier of the terminal;
determining, based on the identifier of the terminal, a first target core network device associated with the terminal, wherein the first target core network device is one of the at least two core network devices; and
sending the information about the terminal to the first target core network device.

4. The method according to claim 2, wherein the executing once, if the operation identifiers in the at least two pieces of first information are the same, the service operation corresponding to the operation identifier comprises:
if the operation identifiers in the at least two pieces of first information are the same, executing the service operation corresponding to the operation identifier from a second target core network device among the at least two core network devices, and rejecting to execute the service operation corresponding to the operation identifier from another core network device among the at least two core network devices other than the second target core network device, wherein the second target core network device is one of the at least two core network devices.

5. The method according to claim 4, wherein after the rejecting to execute the service operation corresponding to the operation identifier from the another core network device among the at least two core network devices other than the second target core network device, the method further comprises:
sending indication information to the another core network device, wherein the indication information indicates that the service operation corresponding to the operation identifier from the another core network device is a repeated service operation.

6. A communication method, applied to a first core network device, and comprising:
determining an operation identifier, wherein the operation identifier indicates information about a corresponding service operation; and
sending the operation identifier.

7. The method according to claim 6, wherein the sending the operation identifier comprises:
sending the operation identifier to at least two second core network devices.

8. The method according to claim 6 or 7, wherein the determining the operation identifier comprises:
receiving the first information from a service requester, wherein the first information comprises the operation identifier and the information about the service operation; and
determining the operation identifier based on the first information.

9. The method according to claim 6 or 7, wherein the determining the operation identifier comprises:
receiving second information from a service requester, wherein the second information comprises the information about the service operation; and
generating the operation identifier based on the information about the service operation.

10. The method according to any one of claims 1 to 9, wherein the information about the service operation indicates at least one type of the following information:
service requester, operation type, to-be-operated range, and request time point of the service operation.

11. A communication method, applied to a first core network device, and comprising:
obtaining information about a core network device group, wherein the core network device group comprises the first core network device and at least one second core network device;
separately receiving an identifier that is of a second access network device and that is separately sent by the at least one second core network device, wherein one second access network device is a candidate device of one corresponding second core network device; and
selecting a target access network device based on an identifier of a first access network device and identifiers of a plurality of second access network devices, wherein the target access network device is different from a target access network device separately selected by the at least one second core network device, and the first access network device is a candidate device of the first core network device.

12. The method according to claim 11, wherein before the selecting the target access network device based on the identifier of the first access network device and the identifiers of the plurality of second access network devices, the method further comprises:
sending the identifier of the first access network device to the at least one second core network device.

13. The method according to claim 11 or 12, wherein the obtaining the information about the core network device group comprises:
receiving first information from a third core network device, wherein the first information comprises the information about the core network device group.

14. A communication method, applied to a third core network device, and comprising:
determining information about a core network device group, wherein the core network device group comprises a first core network device and at least one second core network device; and
sending the information about the core network device group to the first core network device.

15. The method according to claim 14, wherein the determining the information about the core network device group comprises:
receiving request information from a service requester, wherein the request information comprises information about a service operation, and the information about the service operation indicates information about a to-be-operated area of the service operation; and
determining the information about the core network device group based on the information about the to-be-operated area; and
the sending the information about the core network device group to the first core network device comprises:
sending first information to the first core network device, wherein the first information comprises the information about the core network device group.

16. The method according to claim 15, wherein the first information further comprises an operation identifier, and the operation identifier indicates the information about the corresponding service operation.

17. The method according to claim 16, wherein the information about the service operation indicates at least one type of the following information:
service requester, operation type, to-be-operated range, and request time point of the service operation.

18. A communication method, applied to a first core network device, and comprising:
obtaining at least one piece of location information and an identifier that is of an access network device and that corresponds to each piece of location information;
selecting at least two second core network devices based on target location information, wherein the at least two second core network devices are located in a location area corresponding to the target location information, and the target location information is one of the at least one piece of location information;
allocating different identifiers of access network devices to the at least two second core network devices based on an identifier that is of an access network device and that corresponds to the target location information; and
sending the allocated identifiers of the access network devices respectively to the at least two second core network devices.

19. The method according to claim 18, wherein the obtaining the at least one piece of location information and the identifier that is of the access network device and that corresponds to each piece of location information comprises:
receiving first information from a data management network element, wherein the first information comprises the at least one piece of location information and the identifier that is of the access network device and that corresponds to each piece of location information.

20. The method according to claim 18 or 19, further comprising:
receiving request information from a service requester, wherein the request information comprises information about a service operation, and the information about the service operation indicates information about a to-be-operated area of the service operation; and
determining the target location information based on the information about the to-be-operated area.

21. A communication method, applied to a second core network device, and comprising:
obtaining at least one piece of location information and an identifier that is of an access network device and that corresponds to each piece of location information;
sending, to a data management network element, the at least one piece of location information and the identifier that is of the access network device and that corresponds to each piece of location information; and
receiving an identifier of a first access network device and from a first core network device, wherein the identifier of the first access network device is an identifier that is of an access network device and that corresponds to target location information, the target location information is one of the at least one piece of location information, and the second core network device is located in a location area corresponding to the target location information.

22. A communication apparatus, comprising a functional module for implementing the method according to any one of claims 1 to 21.

23. A communication apparatus, comprising at least one processor and a memory, wherein
the memory is configured to store a computer program or instructions; and
the at least one processor is configured to execute the computer program or the instructions, to perform the method according to any one of claims 1 to 21.

24. A chip system, wherein the chip system comprises a processing circuit, wherein the processing circuit is coupled to a storage medium; and
the processing circuit is configured to execute a part or all of a computer program or instructions in the storage medium, and when the part or all of the computer program or the instructions are executed, the method according to any one of claims 1 to 21 is implemented.

25. A computer-readable storage medium, wherein the computer-readable storage medium stores instructions, and when the instructions are executed by a computer, the method according to any one of claims 1 to 21 is performed.

26. A computer program product comprising a computer program or instructions, wherein when the computer program or the instructions are run on a computer, the method according to any one of claims 1 to 21 is performed.
